# EUROPEAN PATENT APPLICATION

(11) **EP 4 697 845 A1**
(43) Date of publication of application: **18.02.2026**
(21) Application number: 24802654.4
(22) Date of filing: 02.04.2024
(51) Int. Cl.: H04W 74/08

(54) **COMMUNICATION METHOD AND RELATED PRODUCT**

(30) Priority: 06.05.2023 CN 202310508233
(71) Applicant: Huawei Technologies Co., Ltd., Shenzhen, Guangdong 518129 (CN)
(72) Inventor: RUAN, Wei, Shenzhen, Guangdong 518129 (CN); MA, Yunsi, Shenzhen, Guangdong 518129 (CN)
(74) Representative: Goddar, Heinz J.
(86) International application number: PCT/CN2024/085538
(87) International publication number: WO 2024/230367

(57) **Abstract**

This application discloses a communication method and a related product, and may be applied to a wireless local area network system that supports 802.11 series protocols such as a nextgeneration Wi-Fi protocol of IEEE 802.11ax like 802.11be, Wi-Fi 7, or EHT, and a next generation of 802.11be like Wi-Fi 8. The method includes: receiving a plurality of data units; and when a first condition is met, sending an acknowledgment frame used to acknowledge the received plurality of data units. The first condition includes at least one of the following: a quantity of physical protocol layer data units (physical layer protocol data unit, PPDU) or medium access control service data unit (MAC service data unit, MSDU) received in a currently occupied transmit opportunity is greater than or equal to a first threshold. In this way, waiting time for the acknowledgment frame that is replied with is shorter.

## Description

This application claims priority to Chinese Patent Application No. 202310508233.1, filed with the China National Intellectual Property Administration on May 6, 2023, and entitled "COMMUNICATION METHOD AND RELATED PRODUCT", which is incorporated herein by reference in its entirety.

### TECHNICAL FIELD

This application relates to the communication field, and in particular, to a communication method and a related product.

### BACKGROUND

One of main objectives of a next-generation wireless fidelity (wireless fidelity, Wi-Fi) protocol (namely, Wi-Fi 8) is to reduce a tailing latency and jitter. An existing protocol supports an access point (access point, AP) and a station (Station, STA) in occupying a transmit opportunity (transmit opportunity, TXOP) by exchanging a request to send (request to send, RTS) frame and a clear to send (clear to send, CTS) frame. When an AP and a STA 1 occupy a TXOP by exchanging the RTS frame and the CTS frame, only data transmission actively initiated by the AP to the STA is allowed in the TXOP. Even if downlink low-latency traffic (low-latency traffic, LLT) with a higher priority arrives at a STA 2 in the TXOP, the AP cannot transmit the LLT to the STA 2 in a timely manner. Only after the TXOP ends, the AP can contend for a channel to transmit the LLT to the STA 2. Consequently, a transmission latency of the LLT is increased. Therefore, a solution for reducing a transmission latency of a low-latency traffic needs to be studied.

### SUMMARY

Embodiments of this application disclose a communication method and a related product, to reduce a transmission latency of low-latency traffic.

According to a first aspect, an embodiment of this application provides a communication method. The method includes: receiving a plurality of data units; sending an acknowledgment frame when a first condition is met, where the acknowledgment frame is used to acknowledge the received plurality of data units, and the first condition includes at least one of the following: a quantity of physical protocol layer data units (physical protocol layer data unit, PPDU) or medium access control service data units (MAC service data unit, MSDU) received in a currently occupied transmit opportunity is greater than or equal to a first threshold; a quantity of PPDUs or MSDUs received in a currently occupied transmit opportunity after an acknowledgment frame is sent last time is greater than or equal to a second threshold; a difference between a sending end moment of a previous acknowledgment frame and a current moment that are in a currently occupied transmit opportunity is greater than or equal to a third threshold; a difference between a moment at which a 1^{st} data unit is received and a current moment that are in a currently occupied transmit opportunity is greater than or equal to a fourth threshold; first indication information in a first data unit indicates to send an acknowledgment frame after the first data unit is received, where the first data unit is included in the plurality of data units; and first indication information in a first data unit indicates that a quantity of data units to be received before an acknowledgment frame is sent is equal to 0, and the first data unit is included in the plurality of data units. MAC is short for medium access control (medium access control).

In this embodiment of this application, the acknowledgment frame is sent when the first condition is met. In this way, waiting time for the acknowledgment frame that is replied with is shorter, and retransmission for error data can be requested in a timelier manner.

In a possible implementation, the method further includes: receiving a first communication frame, where the first communication frame indicates the first threshold, the second threshold, the third threshold, or the fourth threshold.

In this implementation, the first communication frame is received, to obtain the first threshold, the second threshold, the third threshold, or the fourth threshold based on the first communication frame, so as to further determine whether the first condition for replying with the acknowledgment frame is met.

In a possible implementation, the first communication frame is a beacon frame, a management frame, or a control frame.

In a possible implementation, sending the acknowledgment frame when the first condition is met includes: if a second data unit is being received at a moment at which it is determined that the first condition is met, sending the acknowledgment frame after the second data unit is received.

In this implementation, if the second data unit is being received at the moment at which it is determined that the first condition is met, the acknowledgment frame is sent after the second data unit is received. This can reduce waiting time for sending the acknowledgment frame, and avoid simultaneous transmission of a communication frame with a first communication apparatus.

In a possible implementation, sending the acknowledgment frame after receiving the second data unit includes: after the second data unit is received, sending the acknowledgment frame after a short interframe space (short interframe space, SIFS).

In a possible implementation, sending the acknowledgment frame when the first condition is met includes: if a data unit is being received at a moment at which it is determined that the first condition is met, sending the acknowledgment frame after the data unit is received. For example, after the data unit is received, the acknowledgment frame is sent after the SIFS.

In this implementation, if a data unit is not being received at the moment at which it is determined that the first condition is met, the acknowledgment frame is sent after the data unit is received. This can reduce waiting time for the acknowledgment frame that is replied with, and avoid simultaneous transmission of a communication frame with the first communication apparatus.

In a possible implementation, sending the acknowledgment frame when the first condition is met includes: when the first condition is met, determining whether a data unit is received within a first time interval, where a start moment of the first time interval is a moment at which it is determined that the first condition is met; and when a third data unit is received within the first time interval, sending the acknowledgment frame after the third data unit is received. For example, after the third data unit is received, the acknowledgment frame is sent after the SIFS.

In this implementation, when the third data unit is received within the first time interval, the acknowledgment frame is sent after the third data unit is received. This can reduce waiting time for the acknowledgment frame that is replied with, and avoid simultaneous transmission of a communication frame with the first communication apparatus.

In a possible implementation, sending the acknowledgment frame when the first condition is met includes: when the first condition is met, determining whether a data unit is received within a first time interval, where a start moment of the first time interval is a moment at which it is determined that the first condition is met; and when no data unit is received within the first time interval, contending for a channel, and sending the acknowledgment frame on the channel obtained through contention.

In this implementation, when no data unit is received within the first time interval, the channel is contended for, and the acknowledgment frame is sent on the channel obtained through contention, so that waiting time for sending the acknowledgment frame can be reduced.

In a possible implementation, the first indication information is included in a universal signal (universal signal, U-SIG) field or an ultra high reliability signal (ultra high reliability signal, UHR-SIG) field of the first data unit. For example, a subfield is added to the U-SIG field or the UHR-SIG field to carry the first indication information. For another example, an existing subfield in the U-SIG field is reused to carry the first indication information.

In this implementation, a message carrying the first indication information does not need to be additionally sent, so that signaling overheads can be reduced.

In a possible implementation, the method further includes: transmitting a fourth data unit; and transmitting a first aggregated frame, where the first aggregated frame includes a fifth data unit and an acknowledgment frame for a first data unit set, a type of the fifth data unit is different from types of the plurality of data units, and the first data unit set includes the fourth data unit.

In this implementation, the first aggregated frame is transmitted, so that overheads of air interface resources can be reduced.

In a possible implementation, transmitting the first aggregated frame includes: when the fifth data unit has been buffered before the acknowledgment frame for the first data unit set is sent, after the fourth data unit is received, sending the first aggregated frame after a short interframe space SIFS.

In this implementation, the aggregated frame is transmitted, so that signaling overheads can be reduced, and transmission time of the fifth data unit can be further reduced.

In a possible implementation, the plurality of data units include a data unit of a first type and/or a data unit of a second type, the first type is a service type whose latency requirement is lower than a fifth threshold, and the second type is a service type whose latency requirement is greater than or equal to the fifth threshold, or the first type is a service type whose priority is lower than a sixth threshold, and the second type is a service type whose priority is greater than or equal to the sixth threshold.

According to a second aspect, an embodiment of this application provides another communication method. The method includes: generating a first communication frame, where the first communication frame indicates a first threshold, and the first threshold indicates a quantity of physical protocol layer data units PPDUs or medium access control service data units MSDUs that need to be received in a transmit opportunity before an acknowledgment frame is sent; or the first communication frame indicates a second threshold, and the second threshold indicates a quantity of PPDUs or MSDUs that need to be received in a transmit opportunity after an acknowledgment frame is sent once and before an acknowledgment frame is sent again; or the first communication frame indicates a third threshold, and the third threshold indicates a minimum value of a difference between a sending end moment of a previous acknowledgment frame and a current moment that are in a transmit opportunity; or the first communication frame indicates a fourth threshold, and the fourth threshold indicates a minimum value of a difference between a moment at which a 1^{st} data unit is received and a current moment that are in a transmit opportunity; or first indication information in the first communication frame indicates whether to send an acknowledgment frame after the first communication frame is received; or first indication information in the first communication frame indicates a quantity of data units to be received before an acknowledgment frame is sent; and sending the first communication frame.

In this embodiment of this application, the first communication frame is sent, to obtain the first threshold, the second threshold, the third threshold, or the fourth threshold based on the first communication frame, so as to further determine whether a condition for replying with the acknowledgment frame is met.

In a possible implementation, the first communication frame is a beacon frame, a management frame, or a control frame.

In a possible implementation, the first communication frame includes the first indication information, and the first communication frame is a data unit.

In a possible implementation, the first indication information in the first communication frame indicates to send the acknowledgment frame after the first communication frame is received; and the method further includes: sending the first communication frame or a trigger frame when no acknowledgment frame is received within a second time interval after the first communication frame is sent, where a start moment of the second time interval is a moment at which the first communication frame is sent for a first time, the trigger frame is used to request to send an acknowledgment frame for one or more data units, and the one or more data units include the first communication frame.

In this implementation, when no acknowledgment frame is received within the second time interval after the first communication frame is sent, the first communication frame or the trigger frame is sent. A case in which a second communication apparatus fails to receive the first communication frame (carried to be used by the second communication apparatus to determine whether to reply with the acknowledgment frame after the first communication frame is received) due to interference or another reason is considered, so that impact of interference on replying with the acknowledgment frame can be reduced.

In a possible implementation, the first indication information in the first communication frame indicates to send the acknowledgment frame after the first communication frame is received; and sending the first communication frame includes: sending the first communication frame when a quantity of PPDUs or MSDUs to be transmitted within remaining duration of a currently occupied transmit opportunity is less than the first threshold or the second threshold; or sending the first communication frame when remaining duration of a currently occupied transmit opportunity is less than the third threshold or the fourth threshold.

In this implementation, after receiving the first communication frame or the trigger frame, the second communication apparatus replies with the acknowledgment frame after a specified time interval, for example, the SIFS, to prevent the second communication apparatus from contending for a channel to reply with the acknowledgment frame, and reduce a latency of replying with the acknowledgment frame.

In a possible implementation, the method further includes: transmitting a fourth data unit; and transmitting a first aggregated frame, where the first aggregated frame includes a fifth data unit and an acknowledgment frame for a first data unit set, a type of the fifth data unit is different from types of the plurality of data units, and the first data unit set includes the fourth data unit.

In this implementation, the first aggregated frame is transmitted, so that overheads of air interface resources can be reduced.

According to a third aspect, an embodiment of this application provides another communication method. The method includes: contending for, in a transmit opportunity that is not occupied by a first communication apparatus, a channel for transmitting the sixth data unit; and transmitting the sixth data unit in the transmit opportunity on the channel obtained through contention.

In this embodiment of this application, the first communication apparatus contends for, in the transmit opportunity that is not occupied by the first communication apparatus, the channel for transmitting the sixth data unit, and transmits the sixth data unit in the transmit opportunity on the channel obtained through contention. Embodiments of this application are applicable to a multi-user preemption transmission scenario, and can reduce a latency of low-latency traffic.

In a possible implementation, contending for, in the transmit opportunity, the channel for transmitting the sixth data unit includes: after obtaining the to-be-transmitted sixth data unit in the transmit opportunity, contending for the channel for transmitting the sixth data unit; or after a sending end moment of a seventh data unit, contending for the channel for transmitting the sixth data unit, where the sending end moment is after a moment at which the sixth data unit is obtained, and a type of a service transmitted by using the sixth data unit is different from a type of a service transmitted by using the seventh data unit.

In this implementation, the channel for transmitting the sixth data unit may be contended for in a timely manner.

In a possible implementation, the method further includes: transmitting an eighth data unit; and transmitting a second aggregated frame, where the second aggregated frame includes a ninth data unit and an acknowledgment frame for a second data unit set, and the second data unit set includes the eighth data unit.

In this implementation, the second aggregated frame is transmitted, so that overheads of air interface resources can be reduced.

According to a fourth aspect, an embodiment of this application provides another communication method. The method includes: transmitting an eighth data unit; and transmitting a second aggregated frame, where the second aggregated frame includes a ninth data unit and an acknowledgment frame for a second data unit set, and the second data unit set includes the eighth data unit.

In this embodiment of this application, a second communication apparatus sends the second aggregated frame to a first communication apparatus without separately transmitting the acknowledgment frame, so that overheads of air interface resources can be reduced.

In a possible implementation, transmitting the second aggregated frame includes: when the ninth data unit has been buffered before the acknowledgment frame for the second data unit set is sent, after the eighth data unit is received, sending the second aggregated frame after a short interframe space SIFS.

According to a fifth aspect, an embodiment of this application provides another communication method. The method includes: transmitting a tenth data unit; and simultaneously transmitting a buffered data unit to a plurality of users in a multi-user transmission mode, where a type of the tenth data unit is different from a type of a data unit transmitted in the multi-user transmission mode.

In this embodiment of this application, the buffered data unit is simultaneously transmitted to the plurality of users in the multi-user transmission mode, so that a service transmission latency can be reduced, and a time-frequency resource and/or an air interface resource can be fully used.

In a possible implementation, the tenth data unit carries a first-type service, the data unit transmitted in the multi-user transmission mode carries a second-type service, the first type is a service type whose latency requirement is lower than a fifth threshold, and the second type is a service type whose latency requirement is greater than or equal to the fifth threshold; or the first type is a service type whose priority is lower than a sixth threshold, and the second type is a service type whose priority is greater than or equal to the sixth threshold.

In a possible implementation, simultaneously transmitting the buffered data unit to the plurality of users in the multi-user transmission mode includes: within a third time interval after the tenth data unit is sent, if no preemption transmission of the second-type uplink service is performed, simultaneously transmitting the buffered data unit to the plurality of users in the multi-user transmission mode, where a start moment of the third time interval is a transmission end moment of the tenth data unit.

In this implementation, the buffered data unit can be transmitted in a timely manner.

According to a sixth aspect, an embodiment of this application provides a communication apparatus. The communication apparatus has a function of implementing behavior in the method embodiment in the first aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive a plurality of data units. The processing module is configured to generate an acknowledgment frame, where the acknowledgment frame is used to acknowledge the received plurality of data units. The transceiver module is further configured to send the acknowledgment frame when a first condition is met, where the first condition includes at least one of the following: a quantity of PPDUs or MSDUs received in a currently occupied transmit opportunity is greater than or equal to a first threshold; a quantity of PPDUs or MSDUs received in a currently occupied transmit opportunity after an acknowledgment frame is sent last time is greater than or equal to a second threshold; a difference between a sending end moment of a previous acknowledgment frame and a current moment that are in a currently occupied transmit opportunity is greater than or equal to a third threshold; a difference between a moment at which a 1^{st} data unit is received and a current moment that are in a currently occupied transmit opportunity is greater than or equal to a fourth threshold; first indication information in a first data unit indicates to send an acknowledgment frame after the first data unit is received, where the first data unit is included in the plurality of data units; and first indication information in a first data unit indicates that a quantity of data units to be received before an acknowledgment frame is sent is equal to 0, and the first data unit is included in the plurality of data units.

In this embodiment of this application, the acknowledgment frame is sent when the first condition is met. In this way, waiting time for the acknowledgment frame that is replied with is shorter, and retransmission for error data can be requested in a timelier manner.

In a possible implementation, the transceiver module is further configured to receive a first communication frame, where the first communication frame indicates the first threshold, the second threshold, the third threshold, or the fourth threshold.

In a possible implementation, the transceiver module is specifically configured to: if the processing module is in a state of receiving a second data unit at a moment at which it is determined that the first condition is met, send the acknowledgment frame after the second data unit is received.

In a possible implementation, the transceiver module is specifically configured to: after the second data unit is received, send the acknowledgment frame after an SIFS.

In a possible implementation, the transceiver module is specifically configured to: if a data unit is not being received at a moment at which it is determined that the first condition is met, send the acknowledgment frame after the data unit is received.

In a possible implementation, the processing module is further configured to: when the first condition is met, determine whether a data unit is received within a first time interval, where a start moment of the first time interval is a moment at which it is determined that the first condition is met. The transceiver module is specifically configured to: when a third data unit is received within the first time interval, send the acknowledgment frame after the third data unit is received.

In a possible implementation, the processing module is further configured to: when the first condition is met, determine whether a data unit is received within a first time interval, where a start moment of the first time interval is a moment at which it is determined that the first condition is met. The transceiver module is specifically configured to: when no data unit is received within the first time interval, contend for a channel, and send the acknowledgment frame on the channel obtained through contention.

In a possible implementation, the transceiver module is further configured to: transmit a fourth data unit; and transmit a first aggregated frame, where the first aggregated frame includes a fifth data unit and an acknowledgment frame for a first data unit set, a type of the fifth data unit is different from types of the plurality of data units, and the first data unit set includes the fourth data unit.

In a possible implementation, the transceiver module is specifically configured to: when the fifth data unit has been buffered before the acknowledgment frame for the first data unit set is sent, after the fourth data unit is received, send the first aggregated frame after a short interframe space SIFS.

For possible implementations of the communication apparatus in the sixth aspect, refer to the possible implementations of the first aspect.

For technical effects brought by the possible implementations of the sixth aspect, refer to descriptions of the technical effects of the first aspect or the possible implementations of the first aspect.

According to a seventh aspect, an embodiment of this application provides a communication apparatus. The communication apparatus has a function of implementing behavior in the method embodiment in the second aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to generate a first communication frame. The first communication frame indicates a first threshold, and the first threshold indicates a quantity of physical protocol layer data units PPDUs or medium access control service data units MSDUs that need to be received in a transmit opportunity before an acknowledgment frame is sent; or the first communication frame indicates a second threshold, and the second threshold indicates a quantity of PPDUs or MSDUs that need to be received in a transmit opportunity after an acknowledgment frame is sent once and before an acknowledgment frame is sent again; or the first communication frame indicates a third threshold, and the third threshold indicates a minimum value of a difference between a sending end moment of a previous acknowledgment frame and a current moment that are in a transmit opportunity; or the first communication frame indicates a fourth threshold, and the fourth threshold indicates a minimum value of a difference between a moment at which a 1^{st} data unit is received and a current moment that are in a transmit opportunity; or first indication information in the first communication frame indicates whether to send an acknowledgment frame after the first communication frame is received; or first indication information in the first communication frame indicates a quantity of data units to be received before an acknowledgment frame is sent. The transceiver module is configured to send the first communication frame.

In this embodiment of this application, the first communication frame is sent, to obtain the first threshold, the second threshold, the third threshold, or the fourth threshold based on the first communication frame, so as to further determine whether a condition for replying with the acknowledgment frame is met.

In a possible implementation, the first indication information in the first communication frame indicates to send the acknowledgment frame after the first communication frame is received. The transceiver module is further configured to: send the first communication frame or a trigger frame when no acknowledgment frame is received within a second time interval after the first communication frame is sent, where a start moment of the second time interval is a moment at which the first communication frame is sent for a first time, the trigger frame is used to request to send an acknowledgment frame for one or more data units, and the one or more data units include the first communication frame.

In a possible implementation, the first indication information in the first communication frame indicates to send the acknowledgment frame after the first communication frame is received. The transceiver module is specifically configured to: send the first communication frame when a quantity of PPDUs or MSDUs to be transmitted within remaining duration of a currently occupied transmit opportunity is less than the first threshold or the second threshold; or send the first communication frame when remaining duration of a currently occupied transmit opportunity is less than the third threshold or the fourth threshold.

In a possible implementation, the transceiver module is further configured to: transmit a fourth data unit; and transmit a first aggregated frame, where the first aggregated frame includes a fifth data unit and an acknowledgment frame for a first data unit set, a type of the fifth data unit is different from types of the plurality of data units, and the first data unit set includes the fourth data unit.

For possible implementations of the communication apparatus in the seventh aspect, refer to the possible implementations of the second aspect.

For technical effects brought by the possible implementations of the seventh aspect, refer to descriptions of the technical effects of the second aspect or the possible implementations of the second aspect.

According to an eighth aspect, an embodiment of this application provides a communication apparatus. The communication apparatus has a function of implementing behavior in the method embodiment in the third aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to contend for, in a transmit opportunity that is not occupied by the processing module, a channel for transmitting a sixth data unit. The transceiver module is configured to transmit the sixth data unit in the transmit opportunity on the channel obtained through contention.

In a possible implementation, the processing module is specifically configured to: after obtaining the to-be-transmitted sixth data unit in the transmit opportunity, contend for the channel for transmitting the sixth data unit; or after a sending end moment of a seventh data unit, contend for the channel for transmitting the sixth data unit, where the sending end moment is after a moment at which the sixth data unit is obtained, and a type of a service transmitted by using the sixth data unit is different from a type of a service transmitted by using the seventh data unit.

In a possible implementation, the transceiver module is further configured to: transmit an eighth data unit; and transmit a second aggregated frame, where the second aggregated frame includes a ninth data unit and an acknowledgment frame for a second data unit set, and the second data unit set includes the eighth data unit.

For possible implementations of the communication apparatus in the eighth aspect, refer to the possible implementations of the third aspect.

For technical effects brought by the possible implementations of the eighth aspect, refer to descriptions of the technical effects of the third aspect or the possible implementations of the third aspect.

According to a ninth aspect, an embodiment of this application provides a communication apparatus. The communication apparatus has a function of implementing behavior in the method embodiment in the fourth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to transmit an eighth data unit. The processing module is configured to generate a second aggregated frame, where the second aggregated frame includes a ninth data unit and an acknowledgment frame for a second data unit set, and the second data unit set includes the eighth data unit. The transceiver module is further configured to transmit the second aggregated frame.

In this embodiment of this application, the second aggregated frame is sent, and the acknowledgment frame does not need to be separately transmitted, so that overheads of air interface resources can be reduced.

In a possible implementation, the transceiver module is specifically configured to: when the ninth data unit has been buffered before the acknowledgment frame for the second data unit set is sent, after the eighth data unit is received, send the second aggregated frame after a short interframe space SIFS.

For possible implementations of the communication apparatus in the ninth aspect, refer to the possible implementations of the fourth aspect.

For technical effects brought by the possible implementations of the ninth aspect, refer to descriptions of the technical effects of the fourth aspect or the possible implementations of the fourth aspect.

According to a tenth aspect, an embodiment of this application provides a communication apparatus. The communication apparatus has a function of implementing behavior in the method embodiment in the fifth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to generate a tenth data unit. The transceiver module is configured to transmit the tenth data unit. The buffered data unit is simultaneously transmitted to a plurality of users in a multi-user transmission mode, where a type of the tenth data unit is different from a type of a data unit transmitted in the multi-user transmission mode.

In this embodiment of this application, the buffered data unit is simultaneously transmitted to the plurality of users in the multi-user transmission mode, so that a service transmission latency can be reduced, and a time-frequency resource and/or an air interface resource can be fully used.

In a possible implementation, the transceiver module is specifically configured to: within a third time interval after the tenth data unit is sent, if no preemption transmission of the second-type uplink service is performed, simultaneously transmit the buffered data unit to the plurality of users in the multi-user transmission mode, where a start moment of the third time interval is a transmission end moment of the tenth data unit.

For possible implementations of the communication apparatus in the tenth aspect, refer to the possible implementations of the fifth aspect.

For technical effects brought by the possible implementations of the tenth aspect, refer to descriptions of the technical effects of the fifth aspect or the possible implementations of the fifth aspect.

According to an eleventh aspect, an embodiment of this application provides another communication apparatus. The communication apparatus includes a processor, the processor is coupled to a memory, and the memory is configured to store a program or instructions. When the program or instructions are executed by the processor, the communication apparatus is enabled to perform the method according to any one of the first aspect to the fifth aspect.

In this embodiment of this application, in a process of performing the method, a process of sending information (or a signal) in the method may be understood as a process of outputting information based on instructions of the processor. When the information is output, the processor outputs the information to a transceiver, so that the transceiver transmits the information. After the information is output by the processor, the information may further require other processing, and then reaches the transceiver. Similarly, when the processor receives input information, the transceiver receives the information, and inputs the information into the processor. Further, after the transceiver receives the information, other processing may need to be performed on the information, and then processed information is input into the processor.

An operation such as sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown in the first aspect or any possible implementation of the first aspect.

In a possible implementation, the memory is located outside the communication apparatus. In a possible implementation, the memory is located in the communication apparatus.

In a possible implementation, the processor and the memory may alternatively be integrated into one component, that is, the processor and the memory may alternatively be integrated together.

In a possible implementation, the communication apparatus further includes a transceiver. The transceiver is configured to: receive a signal, send a signal, or the like.

According to a twelfth aspect, an embodiment of this application provides another communication apparatus. The communication apparatus includes a processing circuit and an interface circuit, the interface circuit is configured to obtain data or output data, and the processing circuit is configured to perform the method in any one of the first aspect to the fifth aspect.

According to a thirteenth aspect, an embodiment of this application provides a computer-readable storage medium. The computer-readable storage medium stores a computer program, the computer program includes program instructions, and when the program instructions are executed, a computer is enabled to perform the method according to any one of the first aspect to the fifth aspect.

According to a fourteenth aspect, an embodiment of this application provides a computer program product. The computer program product includes a computer program, the computer program includes program instructions, and when the program instructions are executed, a computer is enabled to perform the method according to any one of the first aspect to the fifth aspect.

According to a fifteenth aspect, an embodiment of this application provides a communication system, including the communication apparatus according to any one of the sixth aspect or the possible implementations of the sixth aspect and the communication apparatus according to any one of the seventh aspect or the possible implementations of the seventh aspect.

According to a sixteenth aspect, an embodiment of this application provides a communication system, including the communication apparatus in the eleventh aspect or any possible implementation of the eleventh aspect and the communication apparatus in the twelfth aspect or any possible implementation of the twelfth aspect.

According to a seventeenth aspect, an embodiment of this application provides a chip, including a processor and a communication interface. The processor reads, through the communication interface, instructions stored in a memory, to perform the method according to any one of the first aspect to the fifth aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram in which an AP and a STA occupy a TXOP by exchanging an RTS frame and a CTS frame to transmit data;
FIG. 2 shows an example of a wireless communication system that can be used in a technical solution according to an embodiment of this application;
FIG. 3 is a flowchart of interaction of a communication method according to an embodiment of this application;
FIG. 4 shows an example in which a second communication apparatus sends an acknowledgment frame when a first condition is met according to an embodiment of this application;
FIG. 5 shows another example in which a second communication apparatus sends an acknowledgment frame when a first condition is met according to an embodiment of this application;
FIG. 6 shows another example in which a second communication apparatus sends an acknowledgment frame when a first condition is met according to an embodiment of this application;
FIG. 7 is a flowchart of interaction of another communication method according to an embodiment of this application;
FIG. 8 shows another example in which a second communication apparatus sends an acknowledgment frame when a first condition is met according to an embodiment of this application;
FIG. 9 shows another example in which a second communication apparatus sends an acknowledgment frame when a first condition is met according to an embodiment of this application;
FIG. 10 shows another example in which a second communication apparatus sends an acknowledgment frame when a first condition is met according to an embodiment of this application;
FIG. 11 shows another example in which a second communication apparatus sends an acknowledgment frame when a first condition is met according to an embodiment of this application;
FIG. 12 is a flowchart of interaction of another communication method according to an embodiment of this application;
FIG. 13 shows another example in which a second communication apparatus sends an acknowledgment frame when a first condition is met according to an embodiment of this application;
FIG. 14 shows another example in which a second communication apparatus sends an acknowledgment frame when a first condition is met according to an embodiment of this application;
FIG. 15 is a flowchart of interaction of another communication method according to an embodiment of this application;
FIG. 16 is a flowchart of interaction of another communication method according to an embodiment of this application;
FIG. 17 shows another example in which a second communication apparatus sends an acknowledgment frame when a first condition is met according to an embodiment of this application;
FIG. 18 shows another example in which a second communication apparatus sends an acknowledgment frame when a first condition is met according to an embodiment of this application;
FIG. 19 shows another example in which a second communication apparatus sends an acknowledgment frame when a first condition is met according to an embodiment of this application;
FIG. 20 shows another example in which a second communication apparatus sends an acknowledgment frame when a first condition is met according to an embodiment of this application;
FIG. 21 shows another example in which a second communication apparatus sends an acknowledgment frame when a first condition is met according to an embodiment of this application;
FIG. 22 shows another example in which a second communication apparatus sends an acknowledgment frame when a first condition is met according to an embodiment of this application;
FIG. 23 is a flowchart of interaction of another communication method according to an embodiment of this application;
FIG. 24 is a diagram of sending an aggregated frame according to an embodiment of this application;
FIG. 25 is another diagram of sending an aggregated frame according to an embodiment of this application;
FIG. 26 is another diagram of sending an aggregated frame according to an embodiment of this application;
FIG. 27 is another diagram of sending an aggregated frame according to an embodiment of this application;
FIG. 28A is another diagram of sending an aggregated frame according to an embodiment of this application;
FIG. 28B is another diagram of sending an aggregated frame according to an embodiment of this application;
FIG. 29 is a flowchart of interaction of another communication method according to an embodiment of this application;
FIG. 30 is a diagram of multi-user preemption transmission according to an embodiment of this application;
FIG. 31 is another diagram of multi-user preemption transmission according to an embodiment of this application;
FIG. 32 is a diagram of a structure of a communication apparatus 3200 according to an embodiment of this application;
FIG. 33 is a diagram of a structure of another communication apparatus 330 according to an embodiment of this application; and
FIG. 34 is a diagram of a structure of another communication apparatus 340 according to an embodiment of this application.

### DESCRIPTION OF EMBODIMENTS

Terms "first", "second", and the like in the specification, claims, and accompanying drawings of this application are merely used to distinguish between different objects, and are not used to describe a specific order. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

The term "embodiment" mentioned in this specification means that a specific feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described may be combined with other embodiments.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, a character "/" usually indicates an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) based only on (or according to) A, and B may alternatively be determined (or generated) based on (or according to) A and/or other information.

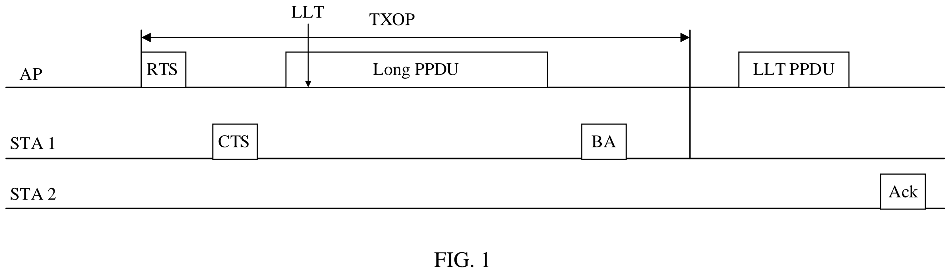

As described in the background, an existing protocol supports an AP and a STA in occupying a TXOP by exchanging an RTS frame and a CTS frame. FIG. 1 is a diagram in which an AP and a STA occupy a TXOP by exchanging an RTS frame and a CTS frame to transmit data. As shown in FIG. 1, the AP and a STA 1 occupy a TXOP by exchanging the RTS frame and the CTS frame. Only data transmission actively initiated by the AP to the STA 1 is allowed in the TXOP. Even if a downlink LLT with a higher priority arrives at a STA 2 in the TXOP, the AP cannot transmit the LLT to the STA 2 in the TXOP. Only after the TXOP ends, the AP can contend for a channel to transmit the LLT to the STA 2. Consequently, a transmission latency of the LLT is increased. Therefore, a solution for reducing a transmission latency of low-latency traffic needs to be studied.

To reduce the transmission latency of the low-latency traffic, this application provides a communication solution in which preemption transmission is allowed in a TXOP. To be specific, in a TXOP occupied by a STA, another STA is allowed to perform preemption transmission of a service with a higher priority or a higher latency requirement. According to the communication solution provided in this application, waiting time for an acknowledgment frame that is replied with can be reduced, and retransmission for error data can be requested in a timelier manner, so that a timeout problem does not occur on an AP side. In addition, in the communication solution provided in this application, time for replying with the acknowledgment frame is controllable. Further, this application further provides a communication solution for aggregated transmission of a unicast data frame and an acknowledgment frame, to reduce overheads of air interface resources. Further, this application further provides a communication solution for multi-user preemption transmission, which is applicable to a multi-user preemption transmission scenario, and can further reduce a latency of low-latency traffic.

The following first describes a communication system to which the communication solution provided in this application is applicable.

This embodiment of this application is mainly described by using an example in which a wireless local area network (wireless local area network, WLAN) is deployed, and in particular, a network to which an IEEE 802.11 system standard is applied is deployed. A person skilled in the art easily understands that various aspects of this application may be extended to other networks using various standards or protocols, for example, Bluetooth (Bluetooth), a high-performance radio LAN (high performance radio LAN, HIPERLAN) (which is a wireless standard similar to the IEEE 802.11 standard, and is mainly used in Europe), and a wide area network (WAN), a personal area network (personal area network, PAN), or another network that is known currently or developed in future. Therefore, regardless of used coverage and a used wireless access protocol, various aspects provided in this application are applicable to any appropriate wireless network.

Alternatively, embodiments of this application are further applicable to a wireless local area network system, like an internet of things (internet of things, IoT) network or vehicle-to-everything (Vehicle to X, V2X). Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The communication systems applicable to this application are merely examples for description, and the communication systems applicable to this application are not limited thereto. This is described herein once for all, and details are not described below again.

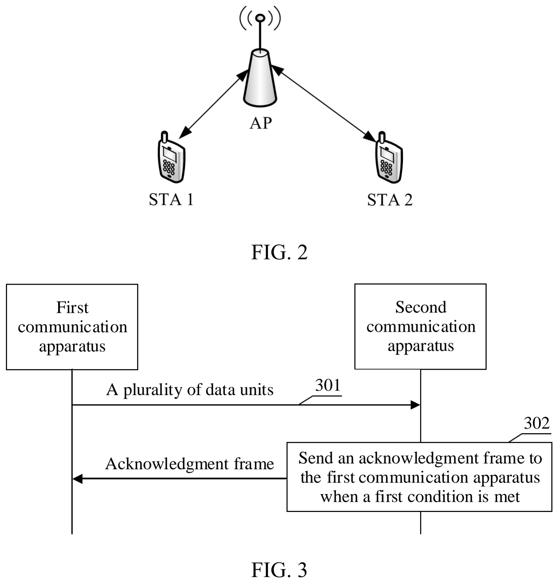

FIG. 2 shows an example of a wireless communication system that can be used in a technical solution according to an embodiment of this application. The communication system includes an AP and one or more STAs (only a STA 1 and a STA 2 are shown). Both the access point and the STA support a WLAN protocol. The WLAN protocol may include IEEE 802.11be (or referred to as Wi-Fi 7 or the EHT protocol), and may further include protocols such as IEEE 802.11ax and IEEE 802.11ac. Certainly, with continuous evolution and development of communication technologies, the WLAN protocol may further include a next-generation protocol of IEEE 802.11be, or the like. A WLAN is used as an example. An apparatus for implementing a method in this application may be an access point or a STA in the WLAN, or a chip or a processing system installed in the access point or the STAs.

The access point is an apparatus having a wireless communication function, supports communication according to the WLAN protocol, and has a function of communicating with another device (for example, a station or another access point) in the WLAN network. Certainly, the access point may further have a function of communicating with another device. The WLAN system includes one or more access point (access point, AP) stations and one or more non-access point stations (non-access point station, non-AP STA). For ease of description, in this specification, the access point station is referred to as an access point (AP), and the non-access point station is referred to as a station (STA).

The access point may be an entire device, or may be a chip, a processing system, or the like installed in the entire device. The device in which the chip or the processing system is installed may implement a method and a function in embodiments of this application under control of the chip or the processing system (namely, the AP). The AP in embodiments of this application is an apparatus that provides a service for a station (Station, STA), and may support 802.11 series protocols, for example, 802.11ac, 802.11n, 802.11g, 802.11b, 802.11a, 802.11be, Wi-Fi 8, or a next generation thereof. For example, the AP may be a communication entity like a communication server, a router, a switch, or a bridge. The AP may include a macro base station, a micro base station (also referred to as a small cell), a pico base station, a femto base station, a relay station, an access point, a gNB, a transmission reception point (transmission reception point, TRP), an evolved NodeB (evolved NodeB, eNB), a radio network controller (radio network controller, RNC), a home base station (for example, a home evolved NodeB or a home NodeB, HNB), a baseband unit (baseband unit, BBU), a Wi-Fi access point (access point, AP), integrated access and backhaul (integrated access and backhaul, IAB), or the like. Certainly, the AP may alternatively be a chip and a processing system in these devices in various forms, to implement the method and the function in embodiments of this application.

The station is an apparatus having a wireless communication function, supports communication according to the WLAN protocol, and has a capability of communicating with another station or access point in the WLAN network. For example, the STAis any communication apparatus that allows a user to communicate with the AP and further communicate with the WLAN. The communication apparatus may be an entire device, or may be a chip, a processing system, or the like installed in the entire device. The device in which the chip or the processing system is installed may implement a method and a function in embodiments of this application under control of the chip or the processing system (namely, the station). The STA may include a mobile phone (mobile phone), a mobile station (mobile station, MS), a tablet computer (pad), a computer with a wireless transceiver function (for example, a notebook computer), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, or the like. The station may include various handheld devices, vehicle-mounted devices, wearable devices, or computing devices that have a wireless communication function, or other processing devices connected to a wireless modem. Optionally, the station may be a handheld device (handset), a vehicle-mounted device, a wearable device, a terminal in an internet of things or an internet of vehicles network, a terminal in any form in 5G and a communication system evolved after 5G, or the like that has a wireless communication function. This is not limited in this application. The station may support 802.11 series protocols, for example, a plurality of WLAN standards such as 802.11ac, 802.11n, 802.11g, 802.11b, 802.11a, 802.11be, Wi-Fi 8, or a next generation thereof.

The following describes, with reference to accompanying drawings, the communication solution provided in embodiments of this application.

FIG. 3 is a flowchart of interaction of a communication method according to an embodiment of this application. As shown in FIG. 3, the method includes the following steps.

301: A first communication apparatus sends a plurality of data units to a second communication apparatus.

Correspondingly, the second communication apparatus receives the plurality of data units from the first communication apparatus. In a possible implementation, the first communication apparatus is an AP, and the second communication apparatus is a STA. In another possible implementation, the first communication apparatus is a STA, and the second communication apparatus is an AP. A possible implementation of step 301 is as follows: The first communication apparatus sends the plurality of data units to the second communication apparatus in a TXOP initiated by the first communication apparatus. The TXOP may be a TXOP occupied by the first communication apparatus and the second communication apparatus by exchanging an RTS frame and a CTS frame. The plurality of data units may include one or more data units of a first type and one or more data units of a second type. Alternatively, the plurality of data units include a plurality of data units of a first type. Alternatively, the plurality of data units include a plurality of data units of a second type. The first type is a service type whose latency requirement is lower than a fifth threshold, and the second type is a service type whose latency requirement is greater than or equal to the fifth threshold. The fifth threshold is not limited in this application. Alternatively, the first type is a service type whose priority is lower than a sixth threshold, and the second type is a service type whose priority is greater than or equal to the sixth threshold. The sixth threshold is not limited in this application. It may be understood that a latency requirement of a service of the first type is higher than that of a service of the second type, or a priority of a service of the first type is lower than that of a service of the second type. In this application, an example of the first type is a non-low-latency traffic type, namely, a type of non-low-latency traffic, and an example of the second type is a low-latency traffic type, namely, a type of low-latency traffic. In this specification, a communication frame for transmitting the non-low-latency traffic is referred to as a non-LLT PPDU, and a communication frame for transmitting the low-latency traffic is referred to as an LLT PPDU.

302: The second communication apparatus sends an acknowledgment frame to the first communication apparatus when a first condition is met.

Correspondingly, the first communication apparatus receives the acknowledgment frame from the second communication apparatus. The acknowledgment frame is used to acknowledge the plurality of received data units. The acknowledgment frame may be an Ack frame, or may be a block acknowledgment (block acknowledgment, BA). The acknowledgment frame may be used by the first communication apparatus to acknowledge the plurality of data units successfully received by the second communication apparatus. For example, the acknowledgment frame includes a bitmap, each bit in the bitmap corresponds to each MSDU, and an MSDU corresponding to a bit whose value is 1 in the bitmap is an MSDU successfully received by the second communication apparatus. A data unit corresponding to a bit whose value is 0 in the bitmap is an MSDU that is not successfully received by the second communication apparatus. It should be understood that there is another possible implementation of the acknowledgment frame. This is not limited herein.

The first condition includes at least one of the following:
a quantity of PPDUs or MSDUs received in a currently occupied transmit opportunity is greater than or equal to a first threshold;
a quantity of PPDUs or MSDUs received in a currently occupied transmit opportunity after an acknowledgment frame is sent last time is greater than or equal to a second threshold;
a difference between a sending end moment of a previous acknowledgment frame and a current moment that are in a currently occupied transmit opportunity is greater than or equal to a third threshold;
a difference between a moment at which a 1^{st} data unit is received and a current moment that are in a currently occupied transmit opportunity is greater than or equal to a fourth threshold;
first indication information in a first data unit indicates to send an acknowledgment frame after the first data unit is received, where the first data unit is included in the plurality of data units; and
first indication information in a first data unit indicates that a quantity of data units to be received before an acknowledgment frame is sent is equal to 0, where the first data unit is included in the plurality of data units.

For example, the second communication apparatus does not send an acknowledgment frame before the current moment in the currently occupied transmit opportunity, and the first condition is that the quantity of PPDUs or MSDUs received in the currently occupied transmit opportunity is greater than or equal to the first threshold. It may be understood that, if the second communication apparatus does not send an acknowledgment frame before the current moment in the currently occupied transmit opportunity, an acknowledgment frame is sent when a quantity of PPDUs or MSDUs received by the second communication apparatus in the currently occupied transmit opportunity is greater than or equal to a first threshold. Alternatively, the first condition is that a quantity of PPDUs or MSDUs of a specified type (for example, the first type) received in the currently occupied transmit opportunity is greater than or equal to the first threshold. In a possible implementation, an indication bit is added to the PPDU to indicate a type of the current PPDU. For example, when a value of the indication bit added to the PPDU is 1, it indicates that the type of the current PPDU is the first type; or when a value of the indication bit added to the PPDU is 0, it indicates that the type of the current PPDU is the second type. In a possible implementation, an indication bit is added to the MSDU to indicate a type of the current MSDU. For example, when a value of the indication bit added to the MSDU is 1, it indicates that the type of the current MSDU is the first type; or when a value of the indication bit added to the MSDU is 0, it indicates that the type of the current MSDU is the second type. The first condition may be understood as that the STA replies with an acknowledgment frame after receiving a specified quantity of PPDUs or MSDUs of a specified type (optional). In this way, waiting time for the acknowledgment frame that is replied with is shorter, and retransmission for error data can be requested in a timelier manner.

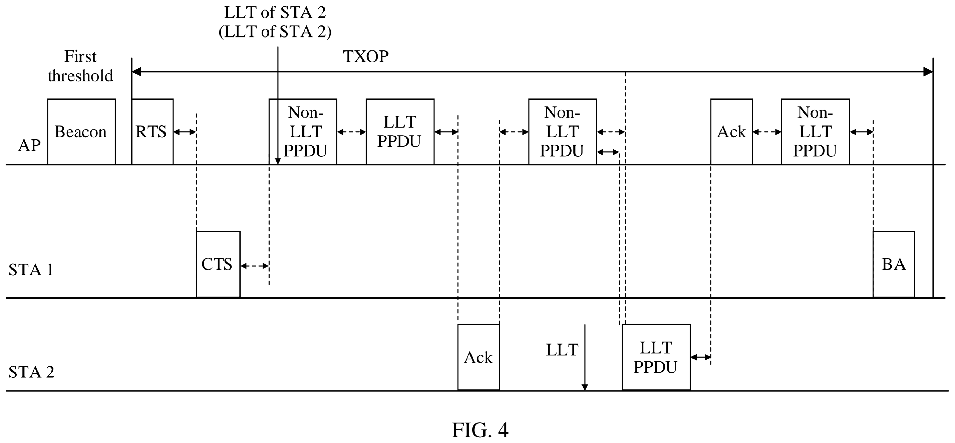

FIG. 4 shows an example in which a second communication apparatus sends an acknowledgment frame when a first condition is met according to an embodiment of this application. In FIG. 4, a first communication apparatus may be an AP in FIG. 4, the second communication apparatus may be a STA 1 in FIG. 4, and a STA 2 is an example of a STA that performs preemption transmission in a TXOP occupied by the AP and the STA 1. As shown in FIG. 4, when the first condition is that a quantity of PPDUs or MSDUs received in a currently occupied transmit opportunity is greater than or equal to a first threshold, an example in which the second communication apparatus sends an acknowledgment frame is as follows: The AP sends a beacon frame, where the beacon frame indicates that the first threshold is 3. The AP and the STA 1 occupy a TXOP (namely, a TXOP in FIG. 4) by exchanging an RTS frame and a CTS frame. The AP receives the CTS frame and sends a 1^{st} non-LLT PPDU to the STA 1 after a specified interval in the TXOP. The AP buffers, at a moment indicated by a downward arrow (on the left), LLT with a higher priority (or a higher latency requirement) to be transmitted to the STA 2. After sending the 1^{st} non-LLT PPDU to the STA 1, the AP sends an LLT PPDU to the STA 2 after a specified interval. After receiving the LLT PPDU from the AP, the STA 2 replies with an Ack frame after an SIFS, where the Ack frame is used to reply to the LLT PPDU from the AP. After receiving the Ack frame, the AP sends a 2^{nd} non-LLT PPDU to the STA 1 after a specified interval. The STA 2 buffers, at a moment indicated by a downward arrow (on the right), an LLT PPDU that needs to be transmitted to the AP, and transmits the LLT PPDU to the AP. A difference between a moment at which the STA 2 sends the LLT PPDU and a transmission end moment of the 2^{nd} non-LLT PPDU is greater than or equal to the SIFS. After receiving the LLT PPDU from the STA 2, the AP replies with an Ack frame after the SIFS. After sending the Ack frame, the AP sends a 3^{rd} non-LLT PPDU to the STA 1 after a specified interval. After the 3^{rd} non-LLT PPDU is received (the first condition is met), the STA 1 sends a BA to the AP after the SIFS. In this specification, the specified interval (for example, a modified interframe space (modified interframe space, MIFS)) is an interval greater than or equal to the SIFS. This is not limited in this application. In this specification, in a time window corresponding to the specified interval, a STA that occupies the TXOP and/or a STA that does not occupy the TXOP is allowed to perform preemption transmission of data with a higher priority (or a higher latency requirement) in the TXOP. A start moment of a time window corresponding to a specified interval is a transmission end moment of a non-LLT PPDU (or the CTS frame, the BA, or the Ack frame)+the SIFS, and an end moment is a transmission end moment of a non-LLT PPDU (or the CTS frame, the BA, or the Ack frame)+the specified interval. In addition, an interval between two adjacent communication frames in the accompanying drawings in this specification is the SIFS (indicated by a horizontal solid line arrow) or the specified interval (indicated by a horizontal dashed line arrow). In this specification, a sequence of communication frames (for example, LLT PPDUs or non-LLT PPDUs) in the accompanying drawings is from left to right. For example, the non-LLT PPDUs in FIG. 4 are sequentially a 1^{st} non-LLT PPDU, a 1^{st} non-LLT PPDU, a 2^{nd} non-LLT PPDU, ..., from left to right.

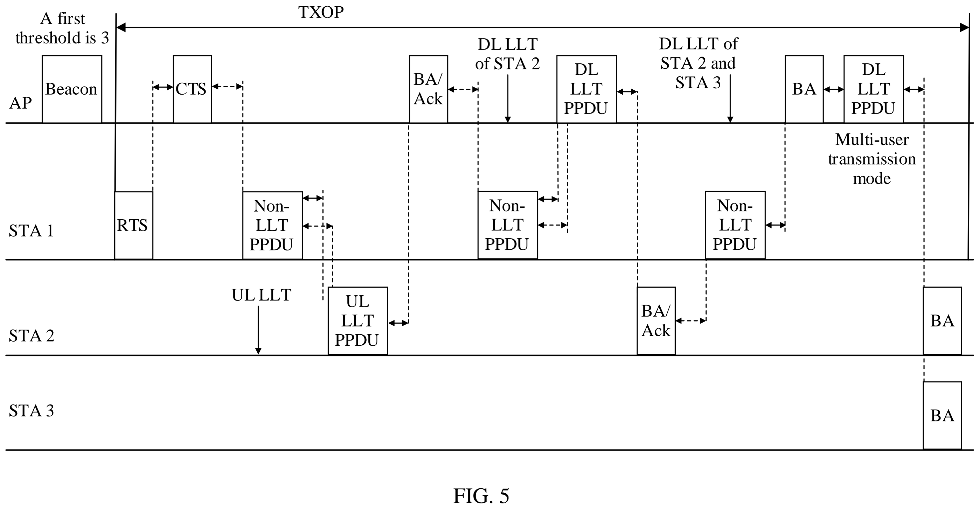

FIG. 5 shows another example in which a second communication apparatus sends an acknowledgment frame when a first condition is met according to an embodiment of this application. A first communication apparatus may be a STA 1 in FIG. 5, and the second communication apparatus may be an AP in FIG. 5. As shown in FIG. 5, when the first condition is that a quantity of PPDUs or MSDUs received in a currently occupied transmit opportunity is greater than or equal to a first threshold, an example in which the second communication apparatus sends an acknowledgment frame is as follows: The AP sends a beacon frame, where the beacon frame indicates that the first threshold is 3, for example, values of a plurality of bits indicating the first threshold in the beacon frame are 3. The STA 1 and the AP occupy a TXOP (namely, a TXOP in FIG. 5) by exchanging an RTS frame and a CTS frame, where the STA 1 is a TXOP initiator. The STA 1 receives the CTS frame and sends a 1^{st} non-LLT PPDU after a specified interval. A STA 2 buffers, at a moment indicated by a leftmost downward arrow, UL LLT data to be transmitted to the AP. The STA 2 transmits a UL LLT PPDU in a time window 1, where a start moment of the time window 1 is a transmission end moment of the 1^{st} non-LLT PPDU+an SIFS, and an end moment is the transmission end moment of the 1^{st} non-LLT PPDU+a specified interval. The AP receives the UL LLT PPDU from the STA 2 and sends a BA/an Ack after the SIFS. Because no preemption transmission of a service (for example, LLT) with a higher priority is present within a specified interval after the AP sends the BA/Ack, the STA 1 receives the BA/Ack, and sends a 2^{nd} non-LLT PPDU after a specified interval. The AP buffers, at a moment indicated by a downward arrow in the middle, DL LLT data to be transmitted to the STA 2. The AP receives the 2^{nd} non-LLT PPDU, and sends a DL LLT PPDU to the STA 2 after the SIFS. The STA 2 receives the DL LLT PPDU, and sends a BA/an Ack after the SIFS. Because no preemption transmission of a service (for example, LLT) with a higher priority is present within a specified interval after the STA 2 sends the BA/Ack, the STA 1 sends, after a transmission end moment of the BA/Ack, a 3^{rd} non-LLT PPDU after a specified interval. The AP buffers, at a moment indicated by a rightmost downward arrow, DL LLT data to be transmitted to the STA 2 and a STA 3. The AP receives the 3^{rd} non-LLT PPDU (the first condition is met), and sends a BA, namely, an acknowledgment frame after the SIFS. After sending the BA, the AP simultaneously transmits a DL LLT PPDU to the STA 2 and the STA 3 in a multi-user transmission mode after the SIFS. After receiving the DL LLT PPDUs, the STA 2 and the STA 3 separately send a BA after the SIFS.

As shown in FIG. 5, in a single-user uplink preemption transmission scenario, only one user, for example, the STA 2, may perform preemption transmission of uplink data in a TXOP that is not occupied by the STA 2. In this case, the STA 2 does not need to contend for a channel when performing preemption transmission of the UL LLT PPDU, and only transmits the uplink data in a specified time window (for example, the time window 1). In other words, in the TXOP that is not occupied by the STA, the STA is supported in preemption transmission of uplink LLT data, namely, the UL LLT PPDU, as shown by the STA 2 in FIG. 5. In the TXOP initiated by the STA 1, the AP is supported in preemption transmission of downlink LLT data, namely, the DL LLT PPDU. The downlink data may be sent to the STA 1, the STA 2, or the STA 3. In FIG. 5, the STA 2 and the STA 3 are used as an example. When the AP performs preemption transmission of the DL LLT PPDU, after receiving the non-LLT PPDU, the AP transmits the DL LLT PPDU after the SIFS without contending for a channel, and supports a multi-user transmission mode, for example, a multi-user multiple-input multiple-output (multi-user multiple-input multiple-output, MU-MIMO) technology or an orthogonal frequency division multiple access (orthogonal frequency division multiple access) OFDMA technology. To avoid a conflict between the DL LLT PPDU and the UL LLT PPDU, the STA 2 is supported in preempting a channel only in a specified time window (for example, the time window 1) to transmit the UL LLT PPDU.

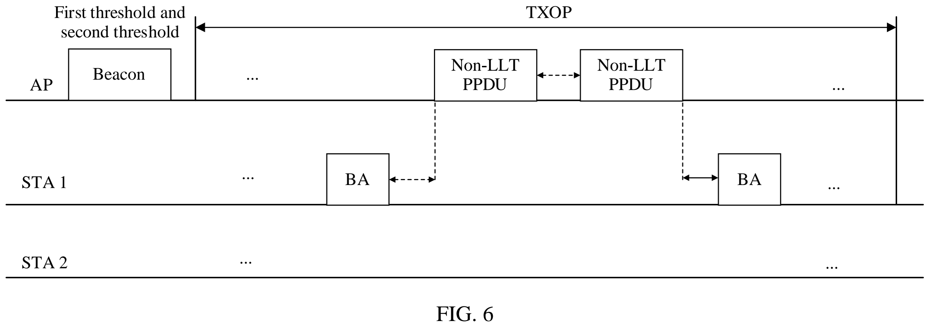

For example, the second communication apparatus has sent one or more acknowledgment frames before a current moment in the currently occupied transmit opportunity, and the first condition is that a quantity of PPDUs or MSDUs received in a currently occupied transmit opportunity after an acknowledgment frame is sent last time is greater than or equal to a second threshold. It may be understood that, if the second communication apparatus has sent an acknowledgment frame before the current moment in the currently occupied transmit opportunity, an acknowledgment frame is sent when a quantity of PPDUs or MSDUs received in the currently occupied transmit opportunity after an acknowledgment frame is sent last time is greater than or equal to the second threshold. Alternatively, the first condition is that a quantity of PPDUs or MSDUs of a specified type (for example, the first type) received in the currently occupied transmit opportunity after an acknowledgment frame is sent last time is greater than or equal to the second threshold. In a possible implementation, an indication bit is added to a PPDU to indicate a type of the current PPDU. The first condition may be understood as that the second communication apparatus replies with an acknowledgment frame when a specified quantity of PPDUs or MSDUs of a specified type (optional) are received in the TXOP after an acknowledgment frame is sent. In this way, waiting time for the acknowledgment frame that is replied with is shorter, and retransmission for error data can be requested in a timelier manner. FIG. 6 shows another example in which a second communication apparatus sends an acknowledgment frame when a first condition is met according to an embodiment of this application. In FIG. 6, for a process in which a STA 1 sends a 1^{st} BA and a process before the STA 1 sends the 1^{st} BA, refer to the process in FIG. 4. A beacon frame indicates that a first threshold is 3 and indicates that a second threshold is 2. After receiving the 1^{st} BA sent by the STA 1, an AP sends a non-LLT PPDU to the STA 1. When receiving two non-LLT PPDUs after sending the 1^{st} BA (that is, the first condition is met), the STA 1 sends a BA to the AP.

For example, the second communication apparatus does not send an acknowledgment frame before a current moment in a currently occupied transmit opportunity, and the first condition is that a difference between a moment at which a 1^{st} data unit is received and the current moment that are in the currently occupied transmit opportunity is greater than or equal to a fourth threshold. It may be understood that, if the second communication apparatus does not send an acknowledgment frame before the current moment in the currently occupied transmit opportunity, an acknowledgment frame is sent when the difference between the moment at which the 1^{st} data unit is received and the current moment that are in the currently occupied transmit opportunity is greater than or equal to the fourth threshold. The first condition may be considered as limiting a minimum value of a difference between a moment at which an acknowledgment frame is sent for a first time or waits to be sent and the moment at which the 1^{st} data unit is received that are in a TXOP. In this example, when the difference between the moment at which the 1^{st} data unit is received and the current moment that are in the currently occupied transmit opportunity is greater than or equal to the fourth threshold, the second communication apparatus sends an acknowledgment frame or waits to send an acknowledgment frame, for example, waits for an air interface resource. In this way, waiting time for the acknowledgment frame that is replied with is shorter, and retransmission for error data can be requested in a timelier manner.

For example, the second communication apparatus has sent one or more acknowledgment frames before the current moment in the currently occupied transmit opportunity, and the first condition is that a difference between a sending end moment of a previous acknowledgment frame and the current moment in the currently occupied transmit opportunity is greater than or equal to a third threshold. It may be understood that, if the second communication apparatus has sent an acknowledgment frame before the current moment in the currently occupied transmit opportunity, an acknowledgment frame is sent when a difference between the sending end moment of a previous acknowledgment frame and the current moment in the currently occupied transmit opportunity is greater than or equal to the third threshold. In this example, when the difference between the sending end moment of the previous acknowledgment frame and the current moment in the currently occupied transmit opportunity is greater than or equal to the third threshold, the second communication apparatus sends an acknowledgment frame or waits to send an acknowledgment frame, for example, waits for an air interface resource. In this way, waiting time for the acknowledgment frame that is replied with is shorter, and retransmission for error data can be requested in a timelier manner.

For example, the first condition is that first indication information in a first data unit indicates to send an acknowledgment frame after the first data unit is received, where the first data unit is included in the plurality of data units. The first data unit may be a PPDU of a first type. The first indication information may be included in a U-SIG field or a UHR-SIG field of the first data unit. The first indication information may alternatively be included in another field of the first data unit. This is not limited in this application. For example, the first indication information is Ack Request (occupying 1 bit). When a value of Ack Request is 1, the first indication information indicates to send an acknowledgment frame after the first data unit is received. When a value of Ack Request is 0, the first indication information indicates to not send an acknowledgment frame after the first data unit is received. It may be understood that, if the value of Ack Request is 1, it indicates that an acknowledgment frame needs to be immediately replied with; or if the value of Ack Request is 0, it indicates that an acknowledgment frame does not need to be immediately replied with. For another example, the first indication information is Ack Delay (occupying 1 bit). When a value of Ack Delay is 1, the first indication information indicates to not send an acknowledgment frame after the first data unit is received. When a value of Ack Delay is 0, the first indication information indicates to send an acknowledgment frame after the first data unit is received. It may be understood that, if the value of Ack Delay is 0, it indicates that an acknowledgment frame needs to be immediately replied with; or if the value of Ack Delay is 1, it indicates that an acknowledgment frame does not need to be immediately replied with. The following uses an example in which the first indication information is Ack Request for description.

For example, the first condition is that first indication information in a first data unit indicates that a quantity of data units to be received before an acknowledgment frame is sent is equal to 0, where the first data unit is included in the plurality of data units. The first data unit may be a PPDU of a first type. The first indication information may be included in a U-SIG field or a UHR-SIG field of the first data unit. The first indication information may alternatively be included in another field of the first data unit. This is not limited in this application. For example, the first indication information is TATT Count (occupying 4 bits), and a value of the TATT Count is used by the second communication apparatus to determine a quantity of data units to be received before the second communication apparatus sends an acknowledgment frame. In a possible implementation, values of TATT Count (namely, the first indication information) carried in a plurality of data units sequentially sent by the first communication apparatus to the second communication apparatus decrease successively. For example, a value of the TATT Count in a 1^{st} sent data unit is 3, a value of the TATT Count in a 2^{nd} sent data unit is 2, a value of the TATT Count in a 3^{rd} sent data unit is 1, and a value of the TATT Count in a 4^{th} sent data unit is 0. In this implementation, when the value of the TATT Count (the first indication information) in the data unit is 0, the first indication information indicates that the quantity of data units to be received before an acknowledgment frame is sent is equal to 0, that is, the first condition is met. In another possible implementation, values of TATT Count (namely, the first indication information) carried in a plurality of data units sequentially sent by the first communication apparatus to the second communication apparatus increase successively. For example, a value of the TATT Count in a 1^{st} sent data unit is 1, a value of the TATT Count in a 2^{nd} sent data unit is 2, a value of the TATT Count in a 3^{rd} sent data unit is 3, and a value of the TATT Count in a 4^{th} sent data unit is 4. It is assumed that the first threshold or the second threshold is 4. When the value of the TATT Count (the first indication information) in the data unit is 4, the first indication information indicates that the quantity of data units to be received before an acknowledgment frame is sent is equal to 0, that is, the first condition is met.

In the method procedure in FIG. 3, the currently occupied transmit opportunity is a TXOP occupied by the first communication apparatus and the second communication apparatus by exchanging the RTS frame and the CTS frame before the first communication apparatus sends a plurality of data units to the second communication apparatus. The current moment is a moment at which whether the first condition is met is determined. The plurality of data units are sent by the first communication apparatus to the second communication apparatus in the currently occupied transmit opportunity. It should be noted that the first threshold, the second threshold, the third threshold, and the fourth threshold may all be set according to an actual requirement. This is not limited in this application. For example, the first threshold is 1 to 64. For example, the second threshold is 1 to 64. For example, the third threshold is 0.1 ms to 2 ms. For example, the fourth threshold is 0.1 ms to 2 ms.

In a possible implementation, the threshold is determined through static negotiation (for example, preconfiguration or protocol specification). In other words, the second communication apparatus obtains one or more of the first threshold, the second threshold, the third threshold, and the fourth threshold through static negotiation (for example, preconfiguration or protocol specification). For example, a protocol supported by the second communication apparatus specifies one or more of the first threshold, the second threshold, the third threshold, and the fourth threshold. For another example, one or more of the first threshold, the second threshold, the third threshold, and the fourth threshold are configured when the second communication apparatus is delivered from a factory.

In a possible implementation, when the first communication apparatus is the AP, and the second communication apparatus is the STA, the first communication apparatus may further perform the following operation: sending a first communication frame. Correspondingly, the second communication apparatus receives the first communication frame. In another possible implementation, when the first communication apparatus is the STA, and the second communication apparatus is the AP, the second communication apparatus may further perform the following operation: sending a first communication frame. Correspondingly, the first communication apparatus receives the first communication frame. The first communication frame indicates the first threshold, the second threshold, the third threshold, or the fourth threshold. The first communication frame may be a beacon (Beacon) frame, a management frame, or a control frame (for example, an RTS). The first communication frame may be for one TXOP, or may be for a plurality of TXOPs. For example, the first communication frame is transmitted by the first communication apparatus (AP) in a currently occupied TXOP, and the first communication frame is only for the currently occupied TXOP. In other words, the second communication apparatus determines, in the currently occupied TXOP based on the threshold indicated by the first communication frame, whether the first condition is met, and needs to determine, in another TXOP occupied by the second communication apparatus based on a threshold indicated by another communication frame, whether the first condition is met. In this example, the first communication apparatus may send, in each TXOP occupied by a different STA (for example, the second communication apparatus), a communication frame that indicates the first threshold, the second threshold, the third threshold, or the fourth threshold. It should be understood that thresholds indicated by the communication frame in different TXOPs are the same or different. When a management frame (namely, the first communication frame) indicates the threshold, the first communication apparatus and the second communication apparatus are allowed to exchange the management frame outside the TXOP, to negotiate the threshold. An example in which the first communication apparatus and the second communication apparatus exchange the management frame outside the TXOP is as follows: The AP sends a request (Request) frame that carries the first threshold, the second threshold, the third threshold, or the fourth threshold, and the STA replies with a response frame after an SIFS, to determine the first threshold, the second threshold, the third threshold, or the fourth threshold. Alternatively, when a management frame (namely, the first communication frame) indicates the threshold, the AP (the first communication apparatus or the second communication apparatus) may broadcast the management frame, namely, the first communication frame, in the TXOP through a 1^{st} PPDU. In a possible implementation, when the first communication frame is a management frame, before the management frame indicating the threshold is received again or the first communication frame becomes invalid, the STA (the first communication apparatus or the second communication apparatus) determines, based on the threshold indicated by the first communication frame, whether the first condition is met.

In a possible implementation, the first communication apparatus or the second communication apparatus further performs the following operation: transmitting a fourth data unit; and transmitting a first aggregated frame, where the first aggregated frame includes a fifth data unit and an acknowledgment frame for a first data unit set, a type of the fifth data unit is different from types of the plurality of data units, and the first data unit set includes the fourth data unit. For example, the fifth data unit is an LLT PPDU, and the plurality of data units are non-LLT PPDUs. In this application, transmission is sending or receiving. For example, when the first communication apparatus or the second communication apparatus has buffered the fifth data unit before sending the acknowledgment frame for the first data unit set, after the fourth data unit is received, the first aggregated frame is sent after an SIFS. For another example, before replying with the acknowledgment frame, the first communication apparatus or the second communication apparatus determines that the fifth data unit (a priority of the fifth data unit is higher than that of the plurality of data units) needs to be sent, and transmits the first aggregated frame. Upon arrival of an uplink LLT at the STA, the STA is allowed to transmit an UL LLT PPDU carrying the BA, in other words, the STA replies with the acknowledgment frame in advance. In this implementation, transmitting an aggregated frame can reduce the resource overheads.

In this embodiment of this application, when the first condition is met, the second communication apparatus sends the acknowledgment frame to the first communication apparatus. In this way, waiting time for the acknowledgment frame that is replied with is shorter, and retransmission for error data can be requested in a timelier manner.

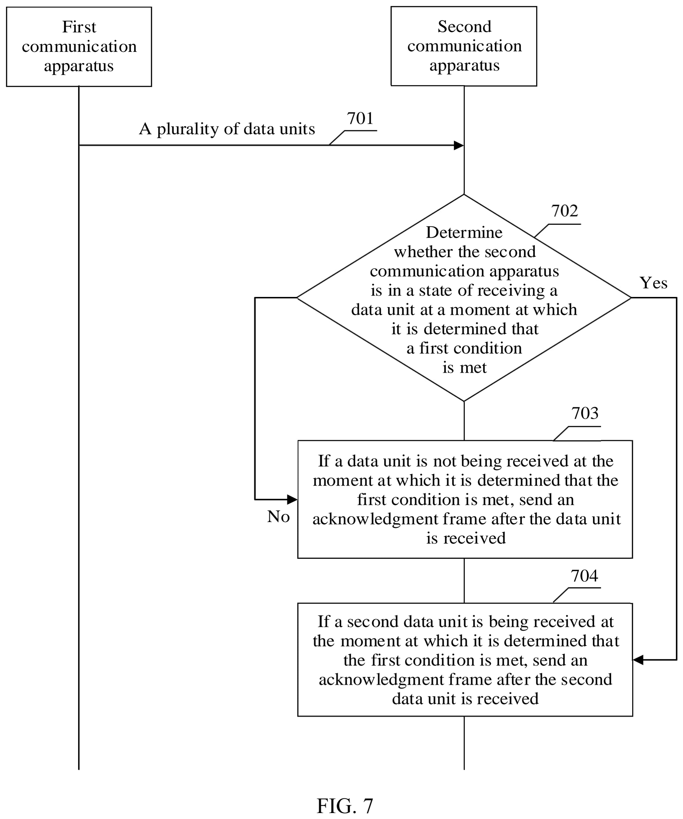

FIG. 7 is a flowchart of interaction of another communication method according to an embodiment of this application. A method procedure in FIG. 7 is a possible implementation of the method described in FIG. 3. In this implementation, the second communication apparatus determines, based on whether the second communication apparatus is in a state of receiving a data unit, when to send the acknowledgment frame when a first condition is met. This can reduce waiting time for sending the acknowledgment frame, and avoid simultaneous transmission of a communication frame with the first communication apparatus. As shown in FIG. 7, the method includes the following steps.

701: The first communication apparatus sends a plurality of data units to the second communication apparatus.

Correspondingly, the second communication apparatus receives the plurality of data units from the first communication apparatus. For step 701, refer to step 301.

702: The second communication apparatus determines whether the second communication apparatus is in the state of receiving a data unit at a moment at which it is determined that the first condition is met.

For example, the second communication apparatus determines, at a first moment, that the second communication apparatus meets the first condition, and the second communication apparatus determines, at the first moment, whether the second communication apparatus is in the state of receiving a data unit. In other words, after determining that the second communication apparatus meets the first condition, the second communication apparatus may immediately determine whether the second communication apparatus is in the state of receiving a data unit. If the second communication apparatus does not send an acknowledgment frame before a current moment in a currently occupied transmit opportunity, the first condition is that a difference between a moment at which a 1^{st} data unit is received and the current moment that are in the currently occupied transmit opportunity is greater than or equal to a fourth threshold. If the second communication apparatus has sent an acknowledgment frame before the current moment in the currently occupied transmit opportunity, the first condition is that a difference between a sending end moment of a previous acknowledgment frame and the current moment that are in the currently occupied transmit opportunity is greater than or equal to a third threshold. The state of receiving a data unit may be understood as that the data unit is being received. The moment at which the second communication apparatus determines that the first condition is met may be a moment at which the second communication apparatus determines that the difference between the sending end moment of the previous acknowledgment frame and the current moment that are in the currently occupied transmit opportunity is greater than or equal to the third threshold. Alternatively, the moment at which the second communication apparatus determines that the first condition is met may be a moment at which the second communication apparatus determines that the difference between the moment at which the 1^{st} data unit is received and the current moment that are in the currently occupied transmit opportunity is greater than or equal to the fourth threshold.

703: If a data unit is not being received at the moment at which it is determined that the first condition is met, send an acknowledgment frame after the data unit is received.

The acknowledgment frame is used to acknowledge the data unit received by the second communication apparatus. The acknowledgment frame may be used to acknowledge the data unit successfully received by the second communication apparatus. For example, before sending the acknowledgment frame, the second communication apparatus receives three data units and does not reply with an acknowledgment frame for the three data units. The acknowledgment frame sent by the second communication apparatus indicates a successfully received data unit in the three data units. A possible implementation of step 703 is as follows: If a data unit is not being received at the moment at which it is determined that the first condition is met, send the acknowledgment frame after the data unit (for example, a non-LLT PPDU) is received. Step 703 is optional.

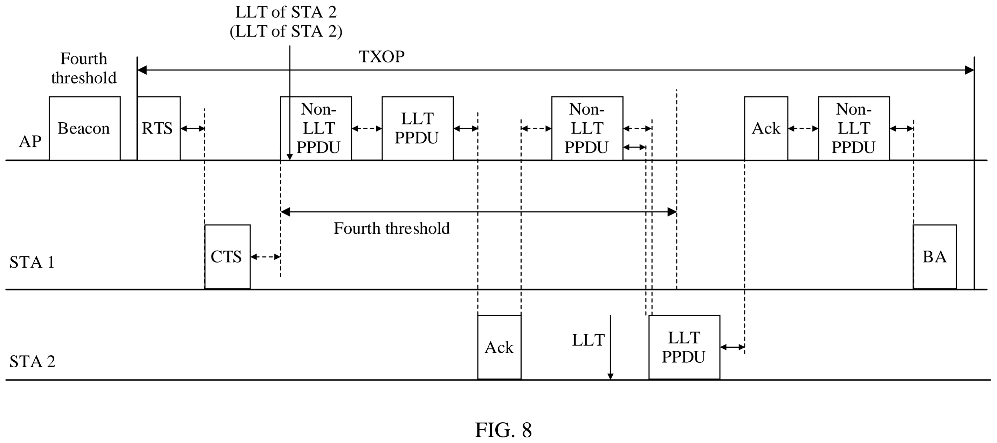

FIG. 8 shows another example in which a second communication apparatus sends an acknowledgment frame when a first condition is met according to an embodiment of this application. In FIG. 8, an AP may be the first communication apparatus, a STA 1 may be the second communication apparatus, and a STA 2 is an example of a STA that performs preemption transmission in a TXOP occupied by the AP and the STA 1. Refer to FIG. 8. When the first condition is that a difference between a moment at which a 1^{st} data unit is received and a current moment that are in a currently occupied transmit opportunity is greater than or equal to a fourth threshold, an example in which the second communication apparatus sends an acknowledgment frame is as follows: For a process in which the STA 1 receives a 2^{nd} non-LLT PPDU and a process before the STA 1 receives the 2^{nd} non-LLT PPDU, refer to the process in FIG. 4. A beacon frame indicates the fourth threshold. After receiving the 2^{nd} non-LLT PPDU, the STA 1 determines that the difference between the moment at which the 1^{st} data unit is received and the current moment that are in the currently occupied transmit opportunity is greater than or equal to the fourth threshold, that is, the first condition is met. The STA 1 is not in a state of receiving a data unit at a moment at which it is determined the STA 1 meets the first condition, that is, no data unit is transmitted between the AP and the STA 1. After receiving one data unit (namely, a 3^{rd} data unit in FIG. 8), the STA 1 sends an acknowledgment frame after an SIFS. For operations performed by the AP and the STA in FIG. 8, refer to FIG. 4. Details are not described herein again.

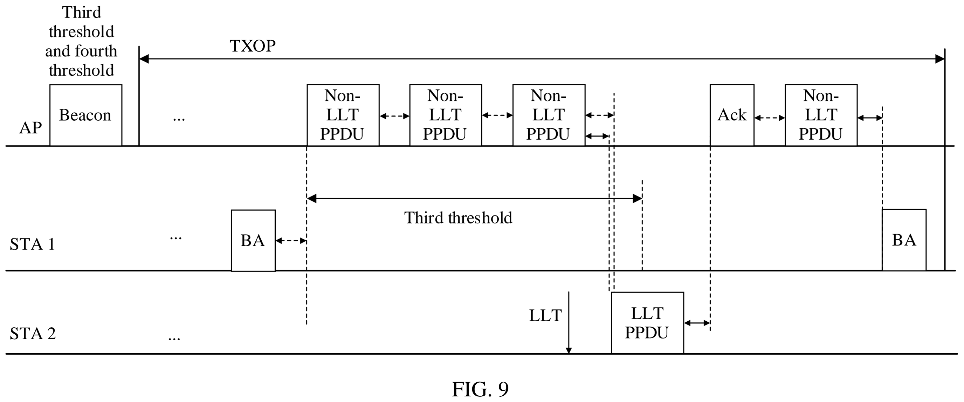

FIG. 9 shows another example in which a second communication apparatus sends an acknowledgment frame when a first condition is met according to an embodiment of this application. In FIG. 9, an AP may be the first communication apparatus, a STA 1 may be the second communication apparatus, and a STA 2 is an example of a STA that performs preemption transmission in a TXOP occupied by the AP and the STA 1. Refer to FIG. 9. When the first condition is that a difference between a sending end moment of a previous acknowledgment frame and a current moment that are in a currently occupied transmit opportunity is greater than or equal to a third threshold, an example in which the second communication apparatus sends an acknowledgment frame is as follows: For a process in which the STA 1 sends a 1^{st} BA and a process before the STA 1 sends the 1^{st} BA, refer to the process in FIG. 4 or FIG. 8. A beacon frame indicates the third threshold and a fourth threshold. After sending the 1^{st} BA, the STA 1 receives three non-LLT PPDUs from the AP. The STA 1 is not in a state of receiving a data unit at a moment at which it is determined that the STA 1 meets the first condition. The STA 2 is sending an LLT PPDU at the moment at which it is determined that the STA 1 meets the first condition. After receiving one data unit (namely, a rightmost data unit in FIG. 9), the STA 1 sends an acknowledgment frame after an SIFS. After receiving the LLT PPDU from the STA 2, the AP sends an Ack frame to the STA 2 after the SIFS.

704: If a second data unit is being received at the moment at which it is determined that the first condition is met, send an acknowledgment frame after the second data unit is received.

Step 704 is optional. The method procedure in FIG. 7 includes step 703 or step 704. The second data unit may be a non-LLT PPDU. A possible implementation of step 703 is as follows: If a second data unit is being received at the moment at which it is determined that the first condition is met, after the second data unit is received, send the acknowledgment frame after the SIFS. In this possible implementation, an interval between start time at which the second communication apparatus sends an acknowledgment frame and end time at which the second communication apparatus receives the second data unit is the SIFS.

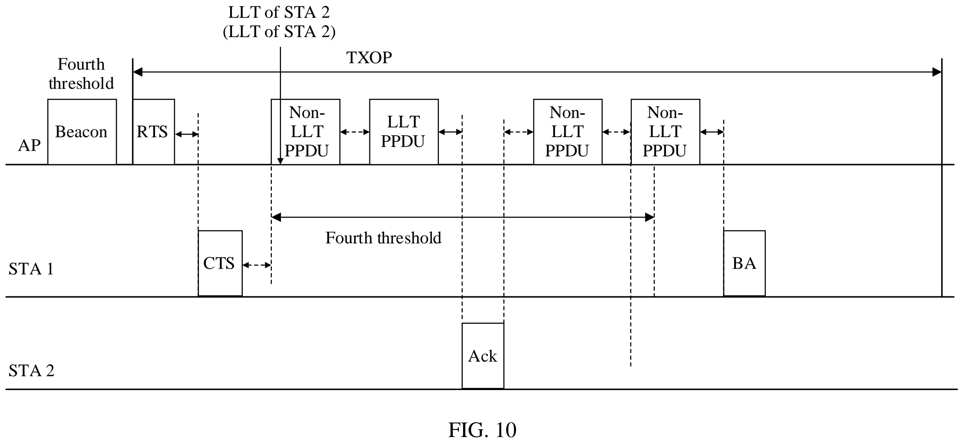

FIG. 10 shows another example in which a second communication apparatus sends an acknowledgment frame when a first condition is met according to an embodiment of this application. In FIG. 10, an AP may be the first communication apparatus, a STA 1 may be the second communication apparatus, and a STA 2 is an example of a STA that performs preemption transmission in a TXOP occupied by the AP and the STA 1. Refer to FIG. 10. When the first condition is that a difference between a moment at which a 1^{st} data unit is received and a current moment that are in a currently occupied transmit opportunity is greater than or equal to a fourth threshold, an example in which the second communication apparatus sends an acknowledgment frame is as follows: For a process in which the STA 1 receives a 2^{nd} non-LLT PPDU and a process before the STA 1 receives the 2^{nd} non-LLT PPDU, refer to the process in FIG. 4. A beacon frame indicates the fourth threshold. The STA 1 is in a state of receiving a data unit at a moment at which it is determined that the STA 1 meets the first condition. After receiving one data unit (namely, a 3^{rd} non-LLT PPDU in FIG. 8), the STA 1 sends an acknowledgment frame after an SIFS.

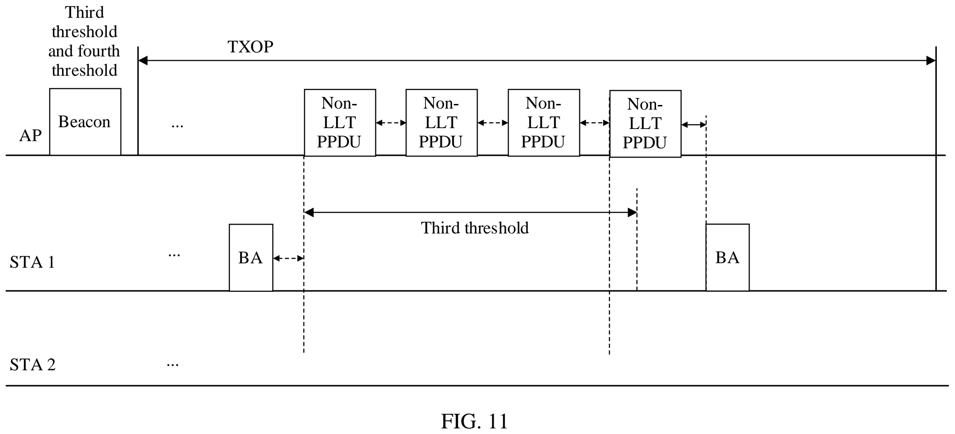

FIG. 11 shows another example in which a second communication apparatus sends an acknowledgment frame when a first condition is met according to an embodiment of this application. In FIG. 11, an AP may be the first communication apparatus, a STA 1 may be the second communication apparatus, and a STA 2 is an example of a STA that performs preemption transmission in a TXOP occupied by the AP and the STA 1. Refer to FIG. 11. When the first condition is that a difference between a sending end moment of a previous acknowledgment frame and a current moment that are in a currently occupied transmit opportunity is greater than or equal to a third threshold, an example in which the second communication apparatus sends an acknowledgment frame is as follows: For a process in which the STA 1 receives a 3^{rd} non-LLT PPDU and a process before the STA 1 receives the 3^{rd} non-LLT PPDU, refer to the process in FIG. 9. A beacon frame indicates the third threshold and a fourth threshold. The STA 1 is in a state of receiving a data unit at a moment at which it is determined that the STA 1 meets the first condition, where the STA 1 is receiving a 4^{th} non-LLT PPDU at the moment at which it is determined that the STA 1 meets the first condition. After receiving one data unit (namely, a 4^{th} non-LLT PPDU in FIG. 11), the STA 1 sends an acknowledgment frame after an SIFS.

In this embodiment of this application, if a data unit is not being received at the moment at which it is determined that the first condition is met, send the acknowledgment frame after the data unit is received. This avoids simultaneous transmission of a communication frame with the first communication apparatus. If the second data unit is being received at the moment at which it is determined that the first condition is met, send the acknowledgment frame after the second data unit is received. This can reduce waiting time for sending the acknowledgment frame, and avoid simultaneous transmission of a communication frame with the first communication apparatus.

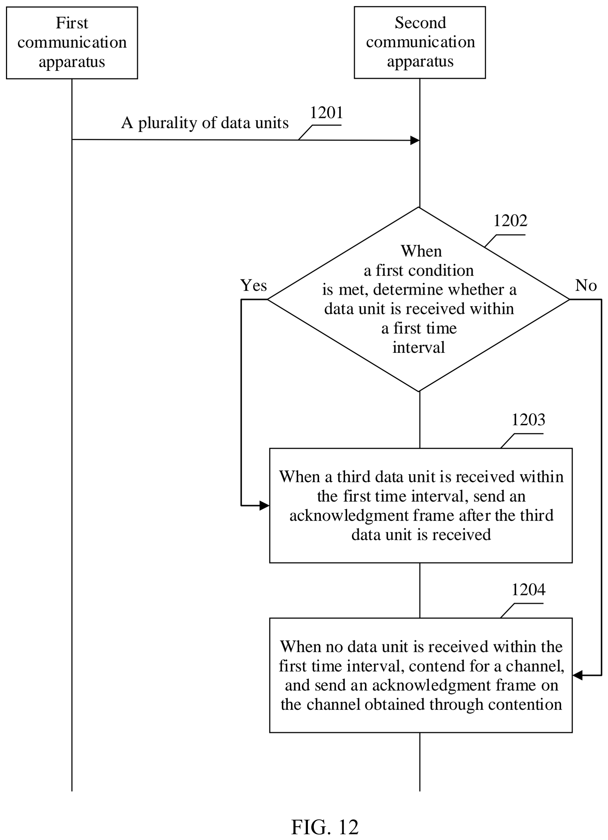

FIG. 12 is a flowchart of interaction of another communication method according to an embodiment of this application. A method procedure in FIG. 12 is a possible implementation of the method described in FIG. 3. In this implementation, a second communication apparatus determines, when a first condition is met, when to send an acknowledgment frame based on whether a data unit is received within a first time interval. This can reduce waiting time for sending the acknowledgment frame, and avoid simultaneous transmission of a communication frame with a first communication apparatus. As shown in FIG. 12, the method includes the following steps.

1201: The first communication apparatus sends a plurality of data units to the second communication apparatus.

Correspondingly, the second communication apparatus receives the plurality of data units from the first communication apparatus. For step 1201, refer to step 301.

1202: When the first condition is met, determine whether a data unit is received within the first time interval.

A start moment of the first time interval is a moment at which it is determined that the first condition is met. Duration of the first time interval may be an SIFS, or may be a specified interval, or may be other duration. This is not limited in this application. If the second communication apparatus does not send an acknowledgment frame before a current moment in a currently occupied transmit opportunity, the first condition is that a difference between a moment at which a 1^{st} data unit is received and the current moment that are in the currently occupied transmit opportunity is greater than or equal to a fourth threshold. If the second communication apparatus has sent an acknowledgment frame before the current moment in the currently occupied transmit opportunity, the first condition is that a difference between a sending end moment of a previous acknowledgment frame and the current moment that are in the currently occupied transmit opportunity is greater than or equal to a third threshold.

1203: When a third data unit is received within the first time interval, send the acknowledgment frame after the third data unit is received.

A possible implementation of step 1203 is as follows: When the third data unit is received within the first time interval, send, after the third data unit is received, an acknowledgment frame after an SIFS.

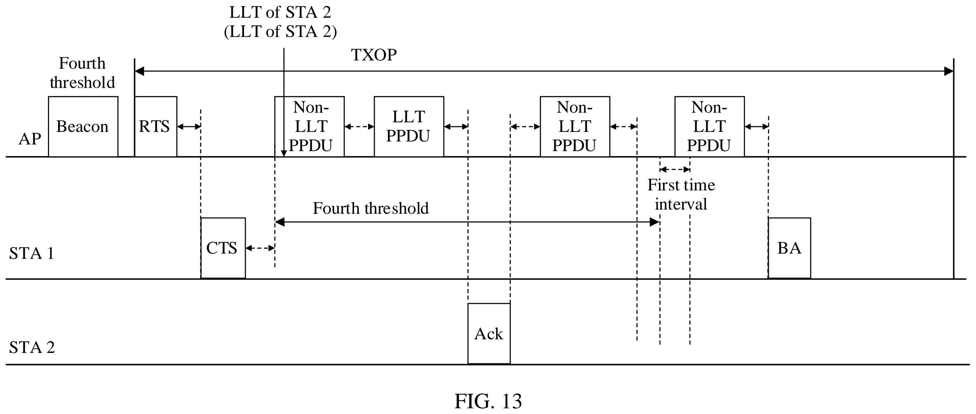

FIG. 13 shows another example in which a second communication apparatus sends an acknowledgment frame when a first condition is met according to an embodiment of this application. In FIG. 13, an AP may be the first communication apparatus, a STA 1 may be the second communication apparatus, and a STA 2 is an example of a STA that performs preemption transmission in a TXOP occupied by the AP and the STA 1. Refer to FIG. 13. When the first condition is that a difference between a moment at which a 1^{st} data unit is received and a current moment that are in a currently occupied transmit opportunity is greater than or equal to a fourth threshold, an example in which the second communication apparatus sends an acknowledgment frame is as follows: For a process in which the STA 1 receives a 2^{nd} non-LLT PPDU and a process before the STA 1 receives the 2^{nd} non-LLT PPDU, refer to the process in FIG. 4. A beacon frame indicates the fourth threshold. The STA 1 is not in a state of receiving a data unit at a moment at which it is determined that the STA 1 meets the first condition. The STA 1 determines whether the STA 1 receives a data unit within a first time interval. When a third data unit (namely, a 3^{rd} non-LLT PPDU in FIG. 13) is received within the first time interval, after the third data unit is received, the STA 1 sends a BA after a SIDS. It should be understood that, when the first condition is that a difference between a sending end moment of a previous acknowledgment frame and the current moment that are in the currently occupied transmit opportunity is greater than or equal to a third threshold, an example in which the second communication apparatus sends an acknowledgment frame is similar to the example in FIG. 13. Details are not described herein again.

1204: When no data unit is received within the first time interval, contend for a channel, and send the acknowledgment frame on the channel obtained through contention.

It should be understood that step 1203 and step 1204 are two parallel steps, that is, a method procedure in FIG. 12 includes step 1203 or step 1204.

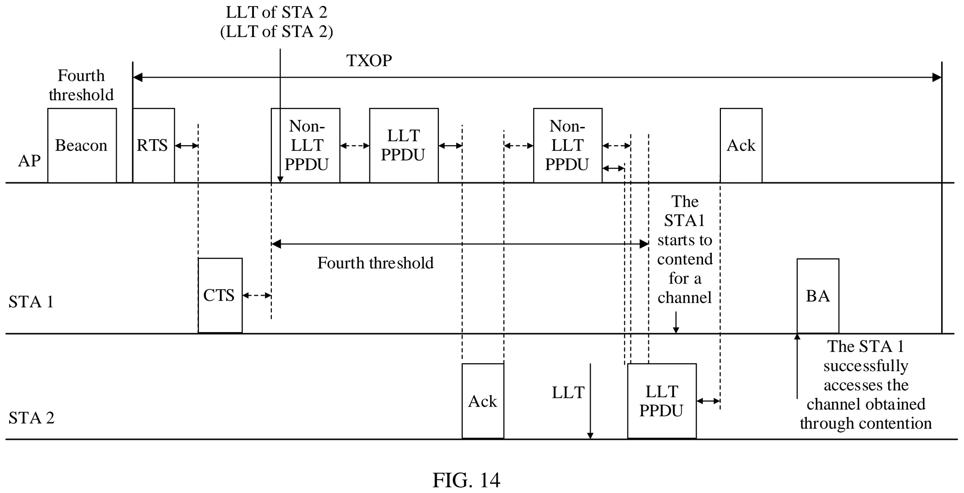

FIG. 14 shows another example in which a second communication apparatus sends an acknowledgment frame when a first condition is met according to an embodiment of this application. In FIG. 14, an AP may be the first communication apparatus, a STA 1 may be the second communication apparatus, and a STA 2 is an example of a STA that performs preemption transmission in a TXOP occupied by the AP and the STA 1. Refer to FIG. 14. When the first condition is that a difference between a moment at which a 1^{st} data unit is received and a current moment that are in a currently occupied transmit opportunity is greater than or equal to a fourth threshold, an example in which the second communication apparatus sends an acknowledgment frame is as follows: For a process in which the STA 1 receives a 2^{nd} non-LLT PPDU and a process before the STA 1 receives the 2^{nd} non-LLT PPDU, refer to the process in FIG. 4. A beacon frame indicates the fourth threshold. The STA 1 is not in a state of receiving a data unit at a moment at which it is determined that the STA 1 meets the first condition. The STA 1 determines whether the STA 1 receives a data unit within the first time interval. When the STA 1 fails to receive a data unit within the first time interval, a channel is contended for, and an acknowledgment frame is sent on the channel obtained through contention. FIG. 14 shows a moment at which the STA 1 starts to contend for a channel (namely, an end moment of the first time interval) and a moment at which the STA 1 successfully accesses the channel. It should be understood that, when the first condition is that a difference between a sending end moment of a previous acknowledgment frame and the current moment that are in the currently occupied transmit opportunity is greater than or equal to a third threshold, an example in which the second communication apparatus sends an acknowledgment frame is similar to the example in FIG. 14. Details are not described herein again.

In this embodiment of this application, when no data unit is received within the first time interval, a channel is contended for, and an acknowledgment frame is sent on the channel obtained through contention. This can reduce waiting time for sending the acknowledgment frame. When a third data unit is received within the first time interval, the acknowledgment frame is sent after the third data unit is received. This can avoid simultaneous transmission of a communication frame with the first communication apparatus.

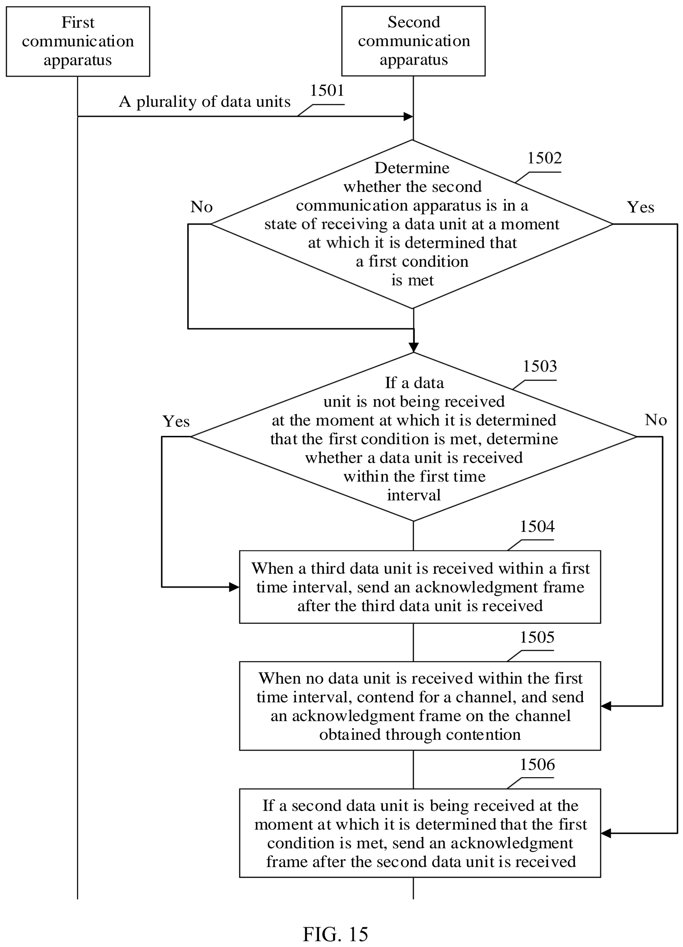

FIG. 15 is a flowchart of interaction of another communication method according to an embodiment of this application. A method procedure in FIG. 15 is a possible implementation of the method described in FIG. 3. In this implementation, when a first condition is met, a second communication apparatus determines, based on whether the second communication apparatus is in a state of receiving a data unit and whether a data unit is received within a first time interval, when to send an acknowledgment frame. This can reduce waiting time for sending the acknowledgment frame, and avoid simultaneous transmission of a communication frame with a first communication apparatus. As shown in FIG. 15, the method includes the following steps.

1501: The first communication apparatus sends a plurality of data units to the second communication apparatus.

Correspondingly, the second communication apparatus receives the plurality of data units from the first communication apparatus. For step 1501, refer to step 301.

1502: The second communication apparatus determines whether the second communication apparatus is in the state of receiving a data unit at a moment at which it is determined that the first condition is met.

For step 1502, refer to step 702.

1503: If a data unit is not being received at the moment at which it is determined that the first condition is met, determine whether the data unit is received within the first time interval.

1504: When a third data unit is received within the first time interval, send the acknowledgment frame after the third data unit is received.

For step 1504, refer to step 1203. The third data unit may be any non-LLT PPDU.

1505: When no data unit is received within the first time interval, contend for a channel, and send the acknowledgment frame on the channel obtained through contention.

For step 1504, refer to step 1204. It should be understood that step 1504 and step 1505 are two parallel steps, that is, a method procedure in FIG. 15 includes step 1504 or step 1505.

1506: If a second data unit is not being received at the moment at which it is determined that the first condition is met, send the acknowledgment frame after the second data unit is received.

For step 1506, refer to step 704.

The solution in FIG. 15 may be considered as a combination of solutions in FIG. 7 and FIG. 12. It should be understood that step 1503 and step 1506 are two parallel steps, that is, a method procedure in FIG. 15 includes step 1503 or step 1506.

In this embodiment of this application, if a second data unit is being received at the moment at which it is determined that the first condition is met, send the acknowledgment frame after the second data unit is received. This can reduce waiting time for sending the acknowledgment frame, and avoid simultaneous transmission of a communication frame with the first communication apparatus. When no data unit is received within the first time interval, a channel is contended for, and an acknowledgment frame is sent on the channel obtained through contention. This can reduce waiting time for sending the acknowledgment frame. When a third data unit is received within the first time interval, the acknowledgment frame is sent after the third data unit is received. This can avoid simultaneous transmission of a communication frame with the first communication apparatus.

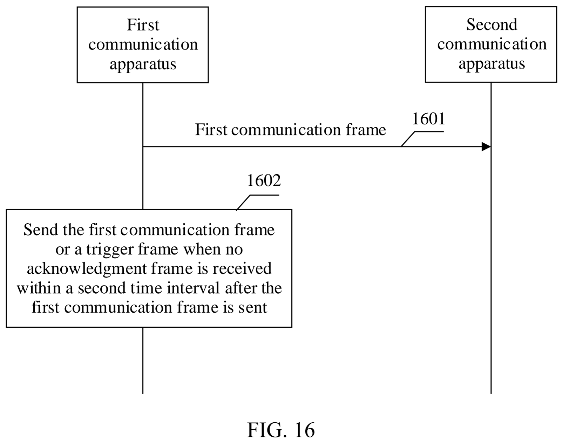

FIG. 16 is a flowchart of interaction of another communication method according to an embodiment of this application. Compared with the foregoing method procedure, the method procedure in FIG. 16 considers a case in which the second communication apparatus fails to receive a first communication frame (carried to be used by the second communication apparatus to determine whether to reply with an acknowledgment frame after the first communication frame is received) due to interference or another reason. This can reduce adverse impact of interference on replying with the acknowledgment frame. As shown in FIG. 16, the method includes the following steps.

1601: A first communication apparatus sends a first communication frame to the second communication apparatus.

First indication information in the first communication frame indicates whether to send an acknowledgment frame after the first communication frame is received. Alternatively, first indication information in the first communication frame indicates a quantity of data units to be received before an acknowledgment frame is sent. The first communication frame is a data unit. For example, the first communication frame is a non-LLT PPDU or an LLT PPDU. Before or after performing a method procedure in FIG. 16, the first communication apparatus and the second communication apparatus may perform the method procedure in FIG. 3, FIG. 7, FIG. 12, or FIG. 15.

A possible implementation of step 1601 is as follows: Send the first communication frame when a quantity of PPDUs or MSDUs to be transmitted within remaining duration of a currently occupied transmit opportunity is less than the first threshold or the second threshold. Another possible implementation of step 1601 is as follows: Send the first communication frame when remaining duration of a currently occupied transmit opportunity is less than the third threshold or the fourth threshold.

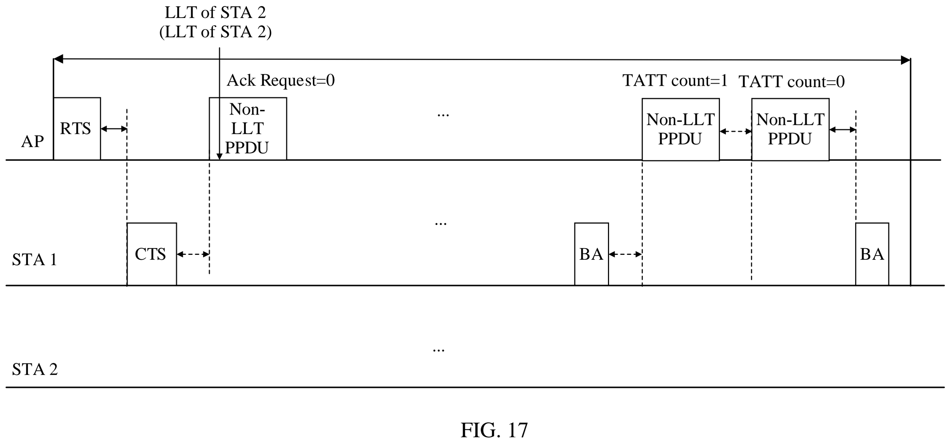

FIG. 17 shows another example in which a second communication apparatus sends an acknowledgment frame when a first condition is met according to an embodiment of this application. Refer to FIG. 17. A process in which the STA 1 sends a 1^{st} BA and a process before the STA 1 sends the 1^{st} BA are the same as or similar to those in any one of FIG. 4, FIG. 5, FIG. 8, FIG. 9, FIG. 10, FIG. 11, FIG. 13, and FIG. 14. After receiving the 1^{st} BA, when the quantity of PPDUs or MSDUs to be transmitted within the remaining duration of the currently occupied transmit opportunity is less than the first threshold or the second threshold, the AP sends one non-LLT PPDU after a specified interval, where TATT count=1 in the non-LLT PPDU, that is, the first indication information indicates that a quantity of data units to be received before the STA 1 sends an acknowledgment frame is 1. After sending the non-LLT PPDU, the AP sends one non-LLT PPDU after a specified interval, where TATT count=0 in the non-LLT PPDU, that is, the first indication information indicates that the quantity of data units to be received before the STA 1 sends an acknowledgment frame is 0. After receiving the non-LLT PPDU carrying TATT count=0, the STA 1 sends a BA after an SIFS. In the example in FIG. 17, after receiving a PPDU finally sent by the AP, the STA 1 can reply with the BA.

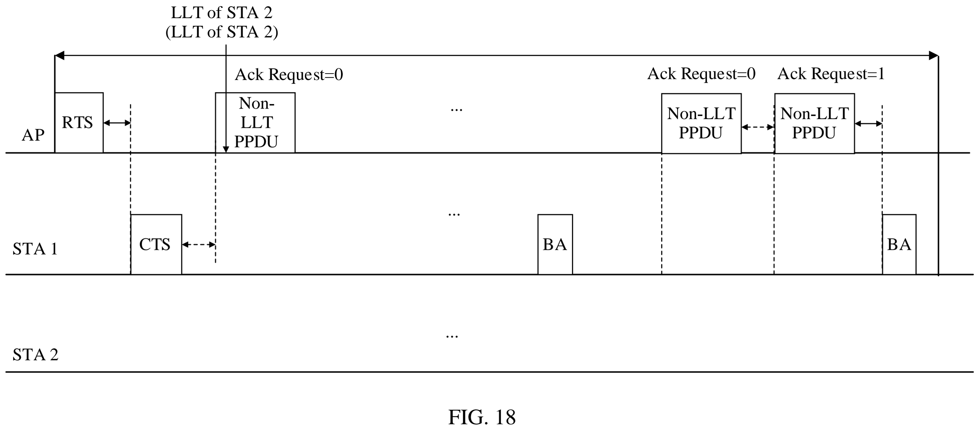

FIG. 18 shows another example in which a second communication apparatus sends an acknowledgment frame when a first condition is met according to an embodiment of this application. Refer to FIG. 17. A process in which the STA 1 sends a 1^{st} BA and a process before the STA 1 sends the 1^{st} BA are the same as or similar to those in any one of FIG. 4, FIG. 5, FIG. 8, FIG. 9, FIG. 10, FIG. 11, FIG. 13, and FIG. 14. After receiving the 1^{st} BA, the AP sends one non-LLT PPDU after a specified interval, where Ack Request=0 in the non-LLT PPDU, that is, the first indication information indicates that the STA 1 does not send an acknowledgment frame after receiving the non-LLT PPDU. After sending the non-LLT PPDU, when the remaining duration of the currently occupied transmit opportunity is less than the third threshold or the fourth threshold, the AP sends one non-LLT PPDU after a specified interval, where Ack Request=1 in the non-LLT PPDU, that is, the first indication information indicates that the STA 1 sends an acknowledgment frame after receiving the non-LLT PPDU. After receiving the non-LLT PPDU carrying Ack Request=1, the STA 1 sends a BA after the SIFS. In the example in FIG. 18, after receiving a PPDU finally sent by the AP, the STA 1 can reply with the BA.

1602: Send the first communication frame or a trigger frame when no acknowledgment frame is received within a second time interval after the first communication frame is sent.

A start moment of the second time interval is a moment at which the first communication frame is sent for a first time, namely, a transmission end moment of the first communication frame. The second time interval may be the SIFS, or may be a time interval that is set based on a requirement. This is not limited in this application. Sending the first communication frame may be understood as retransmitting the first communication frame. The trigger frame is used to request to send an acknowledgment frame for one or more data units. The one or more data units may include the first communication frame. The trigger frame may be used to request the second communication apparatus to send an acknowledgment frame for one or more data units to which the second communication apparatus is not replied. For example, the second communication apparatus receives three data units (for example, non-LLT PPDUs) after sending an acknowledgment frame last time, and the trigger frame is used to request the second communication apparatus to send an acknowledgment frame for the three data units. A possible implementation of step 1602 is as follows: The first communication frame or a trigger frame is sent after the SIFS when no acknowledgment frame is received within a second time interval after the first communication frame is sent. For example, a time interval between an end moment at which the first communication apparatus sends the first communication frame and a start moment at which the first communication apparatus sends the first communication frame or the trigger frame is two SIFSs.

In an interference scenario, the second communication apparatus may receive only some data units. The first communication apparatus uses a solution in which the first indication information in the data unit indicates whether to reply an acknowledgment frame, so that impact of interference on a latency of replying with the acknowledgment frame can be effectively reduced. If the second communication apparatus fails to receive, due to interference, a data unit carrying an Ack request indicator (Ack Request=1 or Ack Delay=0), and after sending the data unit, the first communication apparatus fails to receive, after the SIFS, a BA with which the second communication apparatus replies, the first communication apparatus infers that the second communication apparatus fails to receive the data unit. The following describes two examples of the method procedure in FIG. 16 with reference to the accompanying drawings.

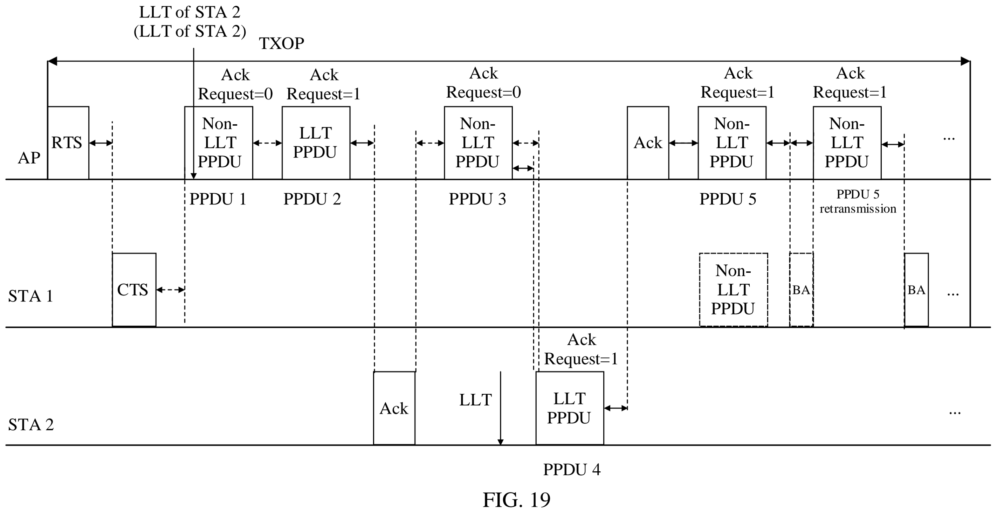

FIG. 19 shows another example in which a second communication apparatus sends an acknowledgment frame when a first condition is met according to an embodiment of this application. Refer to FIG. 19. The AP and the STA 1 occupy a TXOP (namely, a TXOP in FIG. 19) by exchanging an RTS frame and a CTS frame. The AP sends a 1^{st} non-LLT PPDU, namely, a PPDU 1, to the STA 1 in the TXOP, where Ack Request=0 in the PPDU 1, that is, the first indication information indicates to not send an acknowledgment frame after the PPDU 1 is received. The AP buffers, at a moment indicated by a downward arrow (on the left), LLT with a higher priority to be transmitted to a STA 2. After sending the PPDU 1 to the STA 1, the AP sends a PPDU 2 (one LLT PPDU) to the STA 2 after a specified interval, where Ack Request=1 in the PPDU 2, that is, the first indication information indicates to send an acknowledgment frame after the PPDU 2 is received. After receiving the PPDU 2 from the AP, the STA 2 replies with an Ack frame after an SIFS. After receiving the Ack frame, the AP sends a PPDU 3 to the STA 1 after a specified interval, where Ack Request=0 in the PPDU 3, that is, the first indication information indicates to not send an acknowledgment frame after the PPDU 3 is received. The STA 2 buffers, at a moment indicated by a downward arrow (on the right), a PPDU 4 to be transmitted to the AP. The STA 2 transmits the PPDU 4 to the AP after a specified interval after a transmission end moment of the PPDU 3, where Ack Request=1 in the PPDU 4, that is, the first indication information indicates to send an acknowledgment frame after the PPDU 4 is received. After receiving the PPDU 4 from the STA 2, the AP replies with an Ack frame after the SIFS. After sending the Ack frame, the AP sends a PPDU 5 to the STA 1 after a specified interval, where Ack Request=1 in the PPDU 5, that is, the first indication information indicates to send an acknowledgment frame after the PPDU 5 is received. After the PPDU 5 is sent, if the AP fails to receive, after the SIFS, a BA with which the STA 1 replies, the PPDU 5 is retransmitted after the SIFS. After receiving the retransmitted PPDU 5 (the first condition is met), the STA 1 sends a BA to the AP after the SIFS. In FIG. 17, the PPDU 5 in a dashed-line box indicates a PPDU 5 that the STA 1 fails to receive, and the BA in the dashed-line box indicates a BA that needs to be sent by the STA 1 originally but is not actually sent.

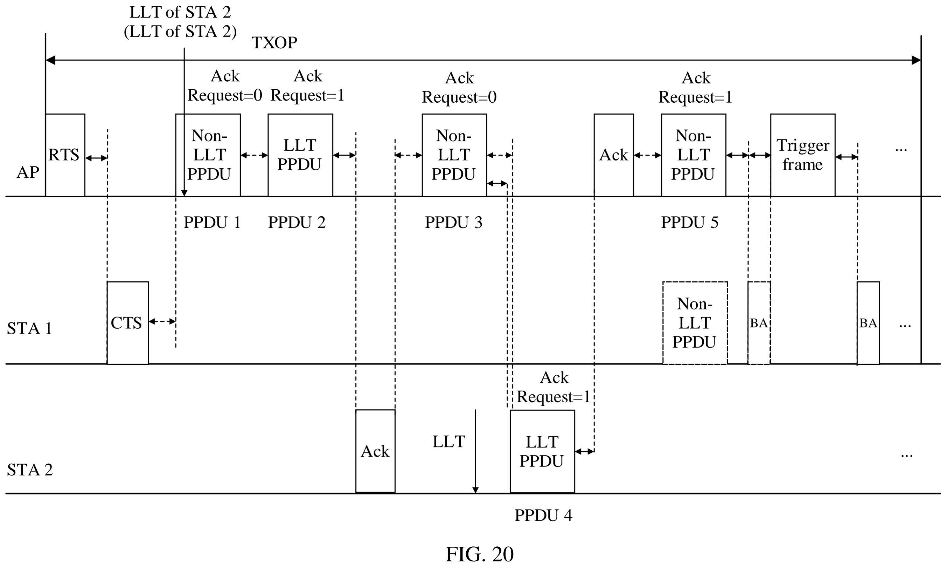

FIG. 20 shows another example in which a second communication apparatus sends an acknowledgment frame when a first condition is met according to an embodiment of this application. Refer to FIG. 20. For a process in which the AP sends the PPDU 5 and the process before the AP sends the PPDU 5, refer to FIG. 19. After the PPDU 5 is sent, if the AP fails to receive, after the SIFS, the BA with which the STA 1 replies, the AP sends a trigger frame after the SIFS. The trigger frame is used to request the STA 1 to send an acknowledgment frame for one or more data units (for example, the PPDU 1, the PPDU 3, and the PPDU 5). After receiving the trigger frame, the STA 1 sends a BA to the AP after the SIFS.

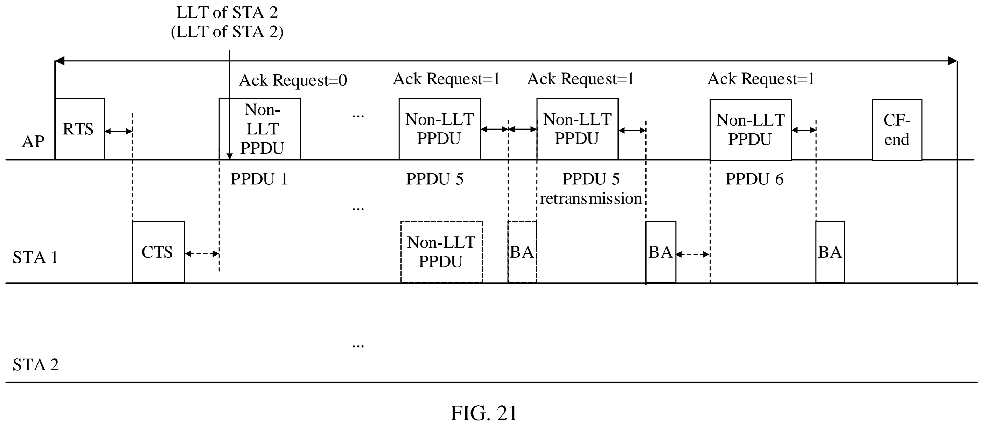

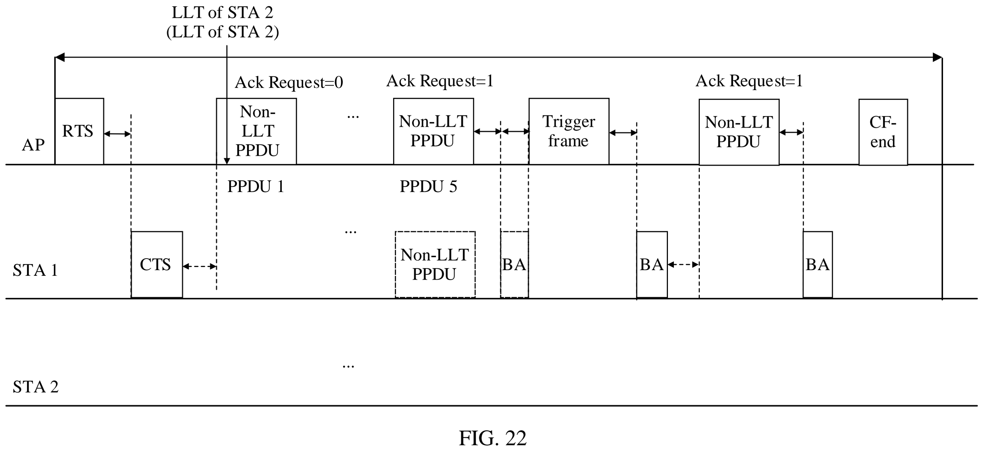

In a possible implementation, the first communication apparatus or the second communication apparatus may terminate transmission of a PPDU of a first type (for example, a non-LLT PPDU) in advance. After determining to end the transmission of the PPDU of the first type in advance, the first communication apparatus or the second communication apparatus may send a data unit, where first indication information in the data unit indicates to send an acknowledgment frame after the data unit is received. The AP may notify the STA in real time to reply with an acknowledgment frame. For example, the AP sends a PPDU, where Ack Request=1 in the PPDU. The STA may notify the AP in real time to reply with an acknowledgment frame. For example, the STA sends a PPDU, where Ack Request=1 in the PPDU. FIG. 21 shows another example in which a second communication apparatus sends an acknowledgment frame when a first condition is met according to an embodiment of this application. Refer to FIG. 21. For a process in which the STA 1 sends a 1^{st} BA (a BA in a solid box) and a process before the STA 1 sends the 1^{st} BA, refer to FIG. 19. After receiving the 1^{st} BA, the AP sends a PPDU 6 after a specified interval, where Ack Request=1 in the PPDU 6, that is, the first indication information indicates to send an acknowledgment frame after the PPDU 6 is received. After receiving the PPDU 6, the STA 1 sends a BA after the SIFS. After receiving the BA, the AP sends a CF-end frame after the SIFS, where the CF-end frame is used to end the TXOP in advance. In this example, the AP ends downlink non-LLT PPDU transmission in advance by sending the PPDU 6. FIG. 22 shows another example in which a second communication apparatus sends an acknowledgment frame when a first condition is met according to an embodiment of this application. Refer to FIG. 22. For a process in which the STA 1 sends a 1^{st} BA (a BA in a solid box) and a process before the STA 1 sends the 1^{st} BA, refer to FIG. 20. After receiving the 1^{st} BA, the AP sends a PPDU 6 after a specified interval, where Ack Request=1 in the PPDU 6, that is, the first indication information indicates to send an acknowledgment frame after the PPDU 6 is received. After receiving the PPDU 6, the STA 1 sends a BA after the SIFS. After receiving the BA, the AP sends a CF-end frame after the SIFS. In this example, the AP ends downlink non-LLT PPDU transmission in advance by sending the PPDU 6.

In this embodiment of this application, the first communication frame or the trigger frame is sent when no acknowledgment frame is received within the second time interval after the first communication frame is sent. A case in which the second communication apparatus fails to receive the first communication frame (carried to be used by the second communication apparatus to determine whether to reply with the acknowledgment frame after the first communication frame is received) due to interference or another reason is considered, so that impact of interference on replying with the acknowledgment frame can be reduced.

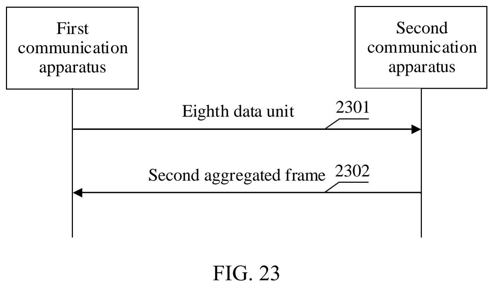

To further reduce air interface overheads, this application provides a communication solution for aggregated transmission of a unicast data frame and an acknowledgment frame. FIG. 23 is a flowchart of interaction of another communication method according to an embodiment of this application. As shown in FIG. 23, the method includes the following steps.

2301: A first communication apparatus sends an eighth data unit.

Correspondingly, a second communication apparatus receives the eighth data unit. The eighth data unit may be a PPDU of a first type or a second type. For example, the eighth data unit is an LLT PPDU. The first communication apparatus is an AP, and the second communication apparatus is a STA. Alternatively, the first communication apparatus is a STA, and the second communication apparatus is an AP.

2302: The second communication apparatus sends a second aggregated frame to the first communication apparatus.

The second aggregated frame includes a ninth data unit and an acknowledgment frame for a second data unit set. The second data unit set includes the eighth data unit. The second data unit set may further include another data unit. Alternatively, the second data unit set may include only the eighth data unit. The ninth data unit may be a PPDU of the first type or the second type. For example, the ninth data unit is an LLT PPDU.

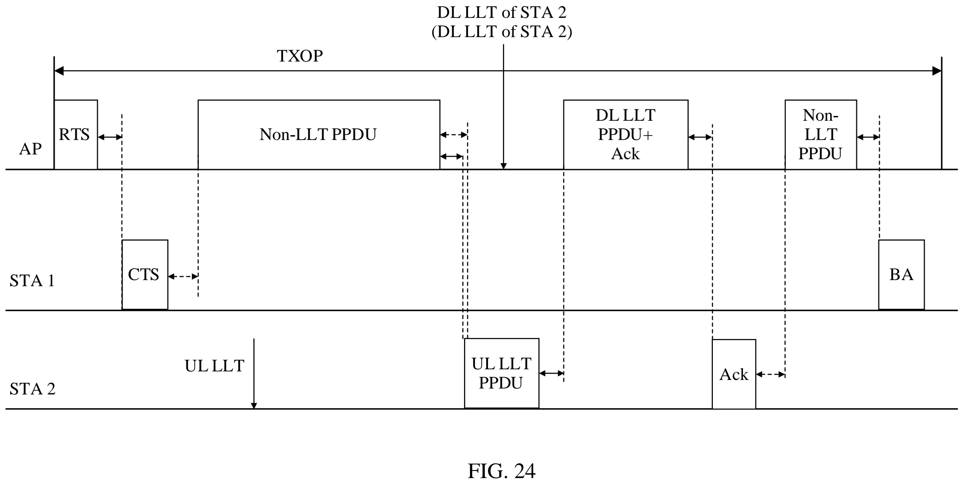

FIG. 24 is a diagram of sending an aggregated frame according to an embodiment of this application. A process of sending the aggregated frame shown in FIG. 24 is an example of a method procedure in FIG. 23. The first communication apparatus may be a STA 2 in FIG. 24, and the second communication apparatus may be an AP in FIG. 24. As shown in FIG. 24, the AP and a STA 1 occupy a TXOP (namely, a TXOP in FIG. 24) by exchanging an RTS frame and a CTS frame. The AP sends a 1^{st} non-LLT PPDU to the STA 1 in the TXOP. The STA 2 buffers, at a moment indicated by a downward arrow (on the leftmost), an uplink (uplink, UL) LLT PPDU to be transmitted to the AP. After the AP sends the 1^{st} non-LLT PPDU, the STA 2 performs preemption transmission of the UP LLT PPDU. After receiving the UL LLT PPDU, the AP transmits, after an SIFS, an aggregated frame carrying an Ack (acknowledgment frame) and a downlink (downlink, DL) LLT PPDU (a ninth data unit), namely, the second aggregated frame. After receiving the aggregated frame carrying the DL LLT PPDU and the Ack, the STA 2 replies with an Ack frame after the SIFS. After receiving the Ack frame, the AP sends a non-LLT PPDU after a specified interval. The STA 1 receives the non-LLT PPDU and sends a BA after the SIFS. In the example shown in FIG. 24, if the AP has buffered DL LLT data of the STA 2 before the AP replies with the Ack frame, the AP receives the UL LLT PPDU and transmits, after the SIFS, the DL LLT PPDU carrying the Ack, that is, transmits the aggregated frame including the Ack and the DL LLT PPDU.

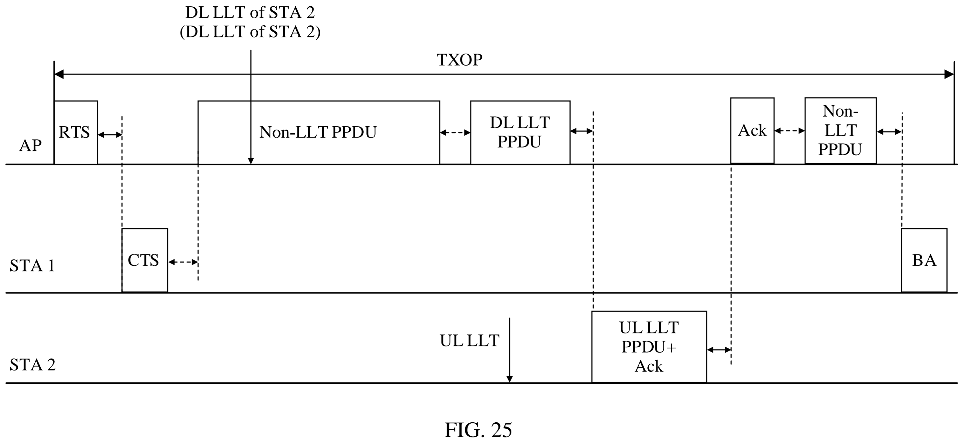

FIG. 25 is another diagram of sending an aggregated frame according to an embodiment of this application. A process of sending the aggregated frame shown in FIG. 25 is an example of a method procedure in FIG. 23. The first communication apparatus may be an AP in FIG. 25, and the second communication apparatus may be a STA 2 in FIG. 25. As shown in FIG. 25, the AP and a STA 1 occupy a TXOP (namely, a TXOP in FIG. 25) by exchanging an RTS frame and a CTS frame. The AP sends a 1^{st} non-LLT PPDU to the STA 1 in the TXOP. The AP buffers, at a moment indicated by a downward arrow (on the leftmost), a DL LLT PPDU to be transmitted to the STA 2. Because no preemption transmission of a service (for example, LLT) with a higher priority is present in a specified interval before a next communication frame is transmitted, the AP transmits the DL LLT PPDU to the STA 2. The STA 2 buffers, at a moment indicated by a downward arrow (on the right), to-be-transmitted UL LLT data. To be specific, before the STA 2 replies with an Ack frame, the STA 2 has buffered the UL LLT data. The STA 2 receives the DL LLT PPDU, and transmits an aggregated frame including Ack and a UL LLT PPDU, namely, the second aggregated frame after an SIFS. After receiving the aggregated frame carrying the UL LLT PPDU and the Ack, the AP replies with an Ack frame after the SIFS. After sending the Ack frame, the AP sends a non-LLT PPDU after a specified interval. The STA 1 receives the non-LLT PPDU and sends a BA after the SIFS. In the example shown in FIG. 25, if the STA 2 has buffered the UL LLT data before the STA 2 replies with the Ack frame, the STA 2 receives the DL LLT PPDU and transmits a UL LLT PPDU carrying an Ack after the SIFS.

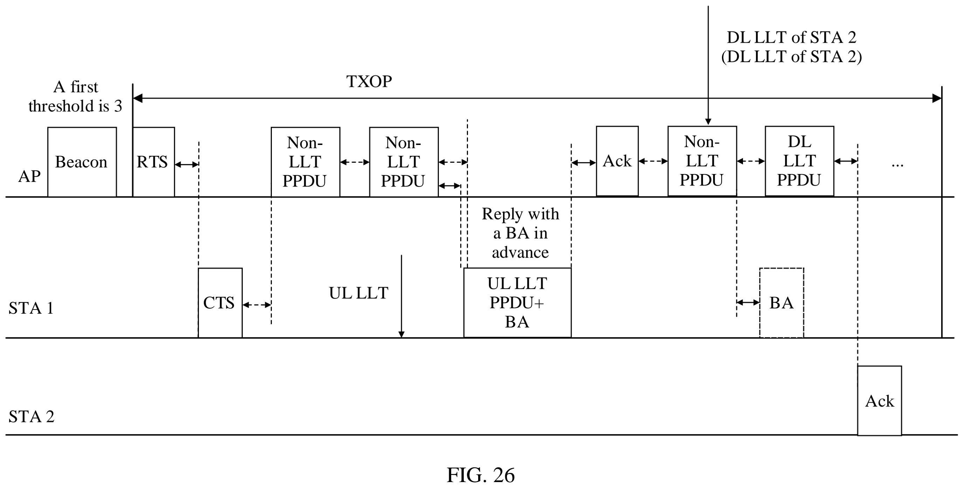

FIG. 26 is another diagram of sending an aggregated frame according to an embodiment of this application. A process of sending the aggregated frame shown in FIG. 26 is an example of a method procedure in FIG. 23. The first communication apparatus may be an AP in FIG. 26, and the second communication apparatus may be a STA 1 in FIG. 26. As shown in FIG. 26, the AP sends a beacon frame. The beacon frame indicates that a first threshold is 3, for example, TATT count=3 in the beacon frame. The STA 1 buffers UL LLT data at a moment indicated by a downward arrow (on the left). After the AP sends a 2^{nd} non-LLT PPDU, the STA 1 performs preemption transmission of an aggregated frame including a UL LLT PPDU and a BA. After receiving the aggregated frame carrying the UL LLT PPDU and the BA, the AP replies with an Ack frame after an SIFS. After sending the Ack frame, the AP sends a non-LLT PPDU after a specified interval. The STA 2 buffers, at a moment indicated by a downward arrow (on the right), DL LLT data to be sent to the STA 2. After sending the non-LLT PPDU, the AP sends a DL LLT PPDU to the STA 2 after a specified interval. The STA 2 receives the DL LLT PPDU and sends an Ack after an SIFS. In FIG. 26, a first condition is not met when the STA 1 sends the aggregated frame including the UL LLT PPDU and the BA, that is, a quantity of data units received by the STA 1 is less than 3. It may be understood that the STA 1 replies with a BA in advance. In the example in FIG. 26, before the STA 1 replies with an acknowledgment frame (for example, the BA), upon arrival of an uplink LLT at the STA 1, the STA 1 is allowed to transmit a UL LLT PPDU carrying a BA, that is, the STA 1 replies with an acknowledgment frame in advance. After the STA 1 transmits an aggregated frame carrying a BA to the AP, a count value of PPDUs received by the STA 1 may be reset. In this case, the STA 1 no longer replies with an acknowledgment frame at an original acknowledgment frame reply moment. In FIG. 26, a BA in a dashed-line box represents the original acknowledgment frame reply moment.

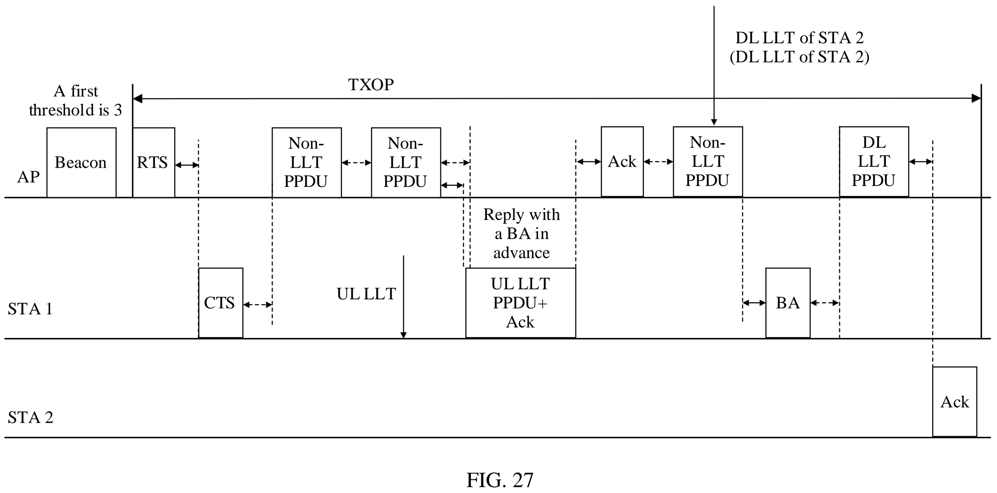

FIG. 27 is another diagram of sending an aggregated frame according to an embodiment of this application. A process of sending the aggregated frame shown in FIG. 27 is an example of a method procedure in FIG. 23. The first communication apparatus may be an AP in FIG. 27, and the second communication apparatus may be a STA 1 in FIG. 27. Refer to FIG. 27. For a process in which the AP sends a 3^{rd} non-LLT PPDU and a process before the AP sends the 3^{rd} non-LLT PPDU, refer to FIG. 26. The STA 1 receives the 3^{rd} non-LLT PPDU and sends a BA after an SIFS. The AP receives the BA and sends a DL LLT PPDU to the STA 2 after a specified interval. The STA 2 receives the DL LLT PPDU and sends an Ack after the SIFS. In the example in FIG. 27, after the STA 1 transmits an aggregated frame carrying a BA to the AP, a count value of PPDUs received by the STA 1 is not reset, that is, the STA 1 replies with an acknowledgment frame again at an original acknowledgment frame reply moment. In other words, the STA 1 may normally reply with an acknowledgment frame at an original moment at which the STA 1 replies with an acknowledgment frame.

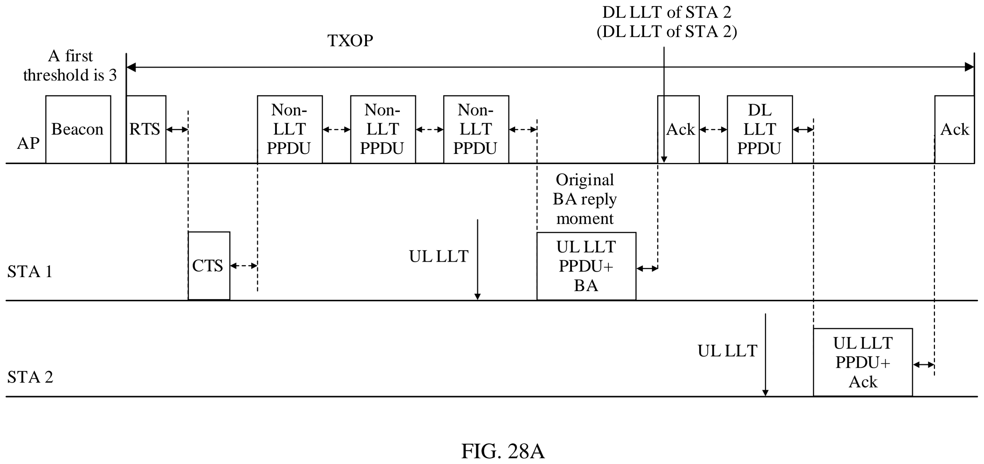

FIG. 28A is another diagram of sending an aggregated frame according to an embodiment of this application. A process of sending the aggregated frame shown in FIG. 28A is an example of a method procedure in FIG. 23. The first communication apparatus may be an AP in FIG. 28A, and the second communication apparatus may be a STA 1 or a STA 2 in FIG. 28A. As shown in FIG. 28A, the AP sends a beacon frame. The beacon frame indicates that a first threshold is 3, for example, TATT count=3 in the beacon frame. The AP and the STA 1 occupy a TXOP (namely, a TXOP in FIG. 28A) by exchanging an RTS frame and a CTS frame. The AP continuously sends three non-LLT PPDUs to the STA 1 in the TXOP. The STA 1 buffers UL LLT data at a moment indicated by a downward arrow (on the leftmost), that is, buffers the UL LLT data before sending a BA. After receiving a 3^{rd} non-LLT PPDU, the STA 1 transmits an aggregated frame including a UL LLT PPDU and a BA after an SIFS. After receiving the aggregated frame carrying the UL LLT PPDU and the BA, the AP replies with an Ack frame after an SIFS. The AP buffers a DL LLT PPDU to be sent to the STA 2 at a moment indicated by a downward arrow in the middle. After sending an Ack frame, the AP sends the DL LLT PPDU to the STA 2 after a specified interval. After receiving the DL LLT PPDU, the STA 2 sends an aggregated frame including the UL LLT PPDU and the Ack after an SIFS. After receiving the aggregated frame including the UL LLT PPDU and the Ack, the AP sends an Ack after the SIFS. In FIG. 28A, a moment at which the STA 1 transmits the aggregated frame including the UL LLT PPDU and the BA is an original BA reply moment. It should be understood that, if the STA 1 has buffered the UL LLT PPDU before replying with an acknowledgment frame (a first condition is met), after receiving the non-LLT PPDU, the STA 1 transmits the aggregated frame including the UL LLT PPDU and the BA after the SIFS. If the STA 2 has buffered the UL LLT before replying with an acknowledgment frame (for example, the Ack frame), after receiving the DL LLT PPDU, the STA 2 transmits the aggregated frame including the UL LLT PPDU and the Ack frame after the SIFS. It should be noted that, in this specification, the acknowledgment frame may be an Ack or a BA, depending on a quantity of to-be-acknowledged MSDUs. If there is at least one to-be-acknowledged MSDU, reply with a BA.

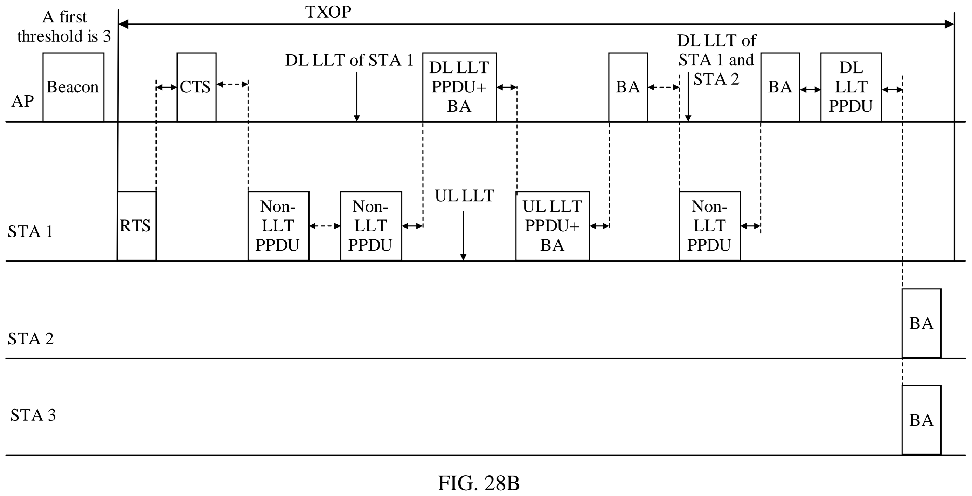

FIG. 28B is another diagram of sending an aggregated frame according to an embodiment of this application. The process of sending the aggregated frame shown in FIG. 28B is an example of a method procedure in FIG. 23. The first communication apparatus may be one of an AP and a STA 1 in FIG. 28B, and the second communication apparatus may be the other of the AP and the STA 1 in FIG. 28B. As shown in FIG. 28B, the AP sends a beacon frame. The beacon frame indicates that a first threshold is 3, for example, TATT count=3 in the beacon frame. The STA 1 and the AP occupy a TXOP (namely, a TXOP in FIG. 28B) by exchanging an RTS frame and a CTS frame, where the STA is a TXOP initiator. The STA 1 receives the CTS frame and sends a 1^{st} non-LLT PPDU after a specified interval. Because no preemption transmission of a service (for example, LLT) with a higher priority is present within a specified interval after the STA 1 sends the 1^{st} non-LLT PPDU, the STA 1 sends the 1^{st} non-LLT PPDU and sends a 2^{nd} non-LLT PPDU after a specified interval. The AP buffers, at a moment indicated by a downward arrow on the leftmost, DL LLT data to be sent to the STA 1. The AP receives the 2^{nd} non-LLT PPDU and sends an aggregated frame including a DL LLT PPDU and a BA after an SIFS. The BA is used to inform the STA 1 whether an MSDU carried in the sent non-LLT PPDU is correctly received by the AP. The STA 1 buffers to-be-sent UL LLT data at a moment indicated by a downward arrow in the middle. The STA 1 receives the aggregated frame including the DL LLT PPDU and the BA, and sends an aggregated frame including a UL LLT PPDU and a BA after the SIFS. The BA is used to inform the AP whether an MSDU carried in the sent DL LLT PPDU is correctly received by the STA 1. The AP receives the aggregated frame including the UL LLT PPDU and the BA, and sends a BA after an SIFS. Because no preemption transmission of a service (for example, LLT) with a higher priority is present within a specified interval after the AP sends a BA, the STA 1 receives the BA and sends a 3^{rd} non-LLT PPDU after a specified interval. The AP receives the 3^{rd} non-LLT PPDU (the first condition is met), and sends a BA, namely, an acknowledgment frame, after the SIFS. The AP sends the BA and simultaneously transmits a DL LLT PPDU to the STA 2 and the STA 3 in a multi-user transmission mode after the SIFS. After receiving the DL LLT PPDUs, the STA 2 and the STA 3 separately send a BA after the SIFS.

As shown in FIG. 28B, in the TXOP initiated by the STA 1, the AP is supported in preemption transmission of downlink LLT data, namely, the DL LLT PPDU. The downlink data may be sent to the STA 1 and/or the STA 2. When the AP performs preemption transmission of the DL LLT PPDU, after receiving the non-LLT PPDU, the AP transmits the DL LLT PPDU after the SIFS without contending for a channel, and supports a multi-user transmission mode (for example, MU-MIMO or OFDMA). When sending the DL LLT PPDU to the STA 1, the AP may aggregate the LLT data and the acknowledgment frame, that is, send the aggregated frame including the DL LLT PPDU and the BA. When the first condition is met and the AP buffers the downlink LLT data, the AP receives the non-LLT PPDU, and the AP sends an acknowledgment frame after the SIFS. At a transmission end moment of the acknowledgment frame, the AP performs preemption transmission of the DL LLT PPDU after the SIFS, and supports a multi-user transmission mode.

In this embodiment of this application, the second communication apparatus sends the second aggregated frame to the first communication apparatus without separately transmitting an acknowledgment frame, so that overheads of air interface resources can be reduced.

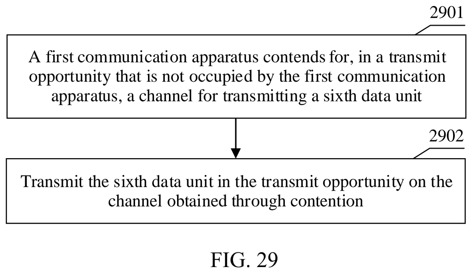

This application further considers a communication solution for multi-user preemption transmission, namely, a solution in which a plurality of users perform preemption transmission of a UL LLT PPDU. FIG. 29 is a flowchart of interaction of another communication method according to an embodiment of this application. A method procedure in FIG. 29 is applicable to a scenario in which a user performs preemption transmission of a UL LLT PPDU. As shown in FIG. 29, the method includes the following steps.

2901: A first communication apparatus contends for, in a transmit opportunity that is not occupied by the first communication apparatus, a channel for transmitting a sixth data unit.

The first communication apparatus may be a STA. The sixth data unit may be a UL LLT PPDU. For example, a STA 2 contends for, in a TXOP owned by a STA 1 or an AP, a channel for transmitting the sixth data unit. In this example, the STA 1 or the AP is an initiator (for sending an RTS frame) of the TXOP, that is, the STA 1 or the AP is a TXOP-holder of the TXOP.

2902: Transmit the sixth data unit in the transmit opportunity on the channel obtained through contention.

A possible implementation of step 2902 is as follows: After the to-be-transmitted sixth data unit is obtained (or buffered) in the transmit opportunity, the channel for transmitting the sixth data unit is contended for. In other words, after buffering the to-be-transmitted sixth data unit, the first communication apparatus may immediately start to contend for the channel for transmitting the sixth data unit.

Another possible implementation of step 2902 is as follows: After a sending end moment of a seventh data unit, the channel for transmitting the sixth data unit is contended for, where the sending end moment is after a moment at which the sixth data unit is obtained, and a type of a service transmitted by using the sixth data unit is different from a type of a service transmitted by using the seventh data unit. The sending end moment of the seventh data unit may be an end moment at which the AP or another STA sends the seventh data unit. The STA (namely, the first communication apparatus) may detect the seventh data unit sent by the AP, and parse duration of the seventh data unit, to learn of the end moment of the seventh data unit. If the STA cannot detect the seventh data unit sent by the AP, after obtaining the sixth data unit, the STA starts to contend for the channel for transmitting the sixth data unit. In this scenario, the STA cannot learn of the end moment of the seventh data unit.

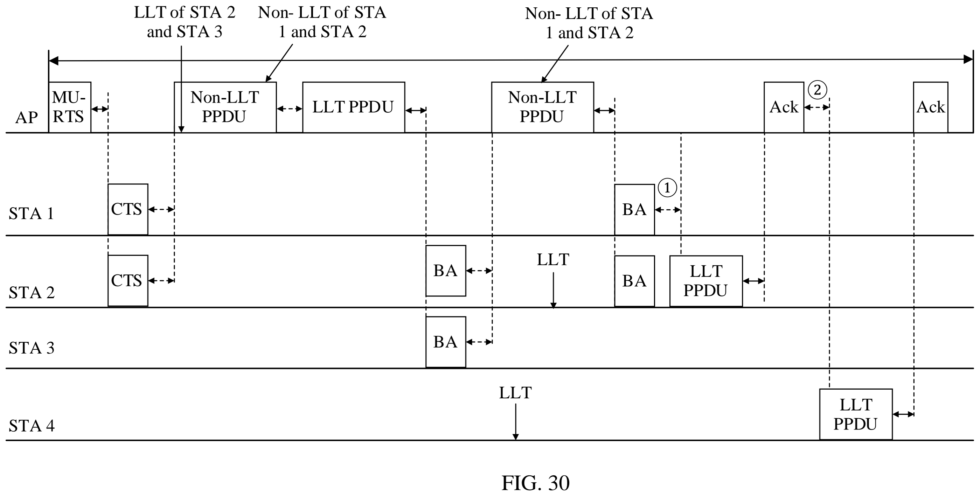

FIG. 30 is a diagram of multi-user preemption transmission according to an embodiment of this application. A multi-user preemption transmission process shown in FIG. 30 is an example of a method procedure in FIG. 29. The first communication apparatus may be a STA 2 or a STA 4 in FIG. 30. As shown in FIG. 30, an AP sends an MU-RTS frame. The MU-RTS frame is used to notify the AP of transmit opportunities TXOPs between the AP and a plurality of STAs, and specify a transmission resource of each STA. A STA 1 and the STA 2 separately reply with a CTS frame for the MU-RTS frame. The STA 1 and the STA 2 jointly occupy a TXOP shown in FIG. 30. The AP sends a 1^{st} non-LLT PPDU to the STA 1 and the STA 2 in a multi-user transmission mode. The AP buffers LLT data to be transmitted to the STA 2 and the STA 3 at a moment indicated by a leftmost downward arrow (namely, a downward arrow on the AP). After sending the non-LLT PPDU to the STA 1 and the STA 2, the AP simultaneously transmits the buffered LLT data to the STA 2 and the STA 3 after a specified interval. After receiving the LLT PPDU, the STA 2 and the STA 3 reply with BAs after an SIFS. For example, the STA 2 and the STA 3 simultaneously reply with the BAs to the AP by using an OFDMA technology. After receiving the BAs from the STA 2 and the STA 3, the AP sends a 2^{nd} non-LLT PPDU to the STA 1 and the STA 2 after a specified interval in the multi-user transmission mode. The STA 2 buffers UL LLT data at a moment indicated by a rightmost downward arrow (namely, a downward arrow on the STA 2), and the STA 4 buffers the UL LLT data at a moment indicated by a downward arrow in the middle (namely, a downward arrow on the STA 4). After receiving the 2^{nd} LLT PPDU (for example, the first condition is met), the STA 1 and the STA 2 reply with BAs after the SIFS. Within a specified interval ① (namely, a specified interval after a transmission end moment of the BA), the STA 2 and the STA 4 contend for a channel, the STA 2 successfully contends for the channel, and the STA 2 transmits a UL LLT PPDU within the specified interval ①. The AP receives the UL LLT PPDU from the STA 2 and sends an Ack after the SIFS. The STA 4 successfully contends for a channel within a specified interval ② (namely, a specified interval after a transmission end moment of the Ack) to transmit the UL LLT PPDU. The AP receives the UL LLT PPDU from the STA 4 and sends an Ack after the SIFS.

In a multi-user LLT preemption transmission process shown in FIG. 30, for uplink LLT preemption transmission, a plurality of STAs are supported in contending for a channel by using a slotted carrier sense multiple access with collision avoidance (carrier sense multiple access with collision avoidance, slotted CSMA/CA) or unslotted carrier sense multiple access with collision avoidance (unslotted CSMA/CA) mechanism within a specified interval (identified by a bidirectional arrow of a dashed line in the figure), or another contention backoff mechanism. In the preemption transmission mechanism, when the plurality of STAs use the CSMA/CA mechanism, a maximum value and a minimum value of a contention window (contention window, CW) are flexibly configured. In a possible implementation, it is specified in a protocol that a specified interframe space is used when the AP and the STA perform the preemption transmission mechanism. In another possible implementation, when a first threshold to a fourth threshold are negotiated, an interframe space is negotiated. For example, the AP notifies parameters such as the threshold and the interframe space in a beacon frame broadcast manner. In another possible implementation, when the STA accesses the AP, the STA and the AP perform capability negotiation by using a management frame (for example, an association request/response frame), to negotiate whether the STA and the AP support a preemption transmission function and a preemption transmission parameter, for example, a specified interval. For downlink LLT preemption transmission, after the AP sends the non-LLT PPDU, if there is no uplink LLT preemption transmission after a specified interval, the AP simultaneously transmits buffered LLT data to a plurality of users by using a multi-user transmission solution, and each user replies with a BA after the SIFS.

In this application, the AP may serve as a TXOP initiator (that is, the AP is a TXOP-holder), or the STA may serve as a TXOP initiator (that is, the STA is a TXOP-holder). In the foregoing embodiment, the solutions provided in this application are described by using an example in which the AP may be used as a TXOP initiator. In the following embodiments, the solutions provided in this application are described by using the STA as a TXOP initiator.

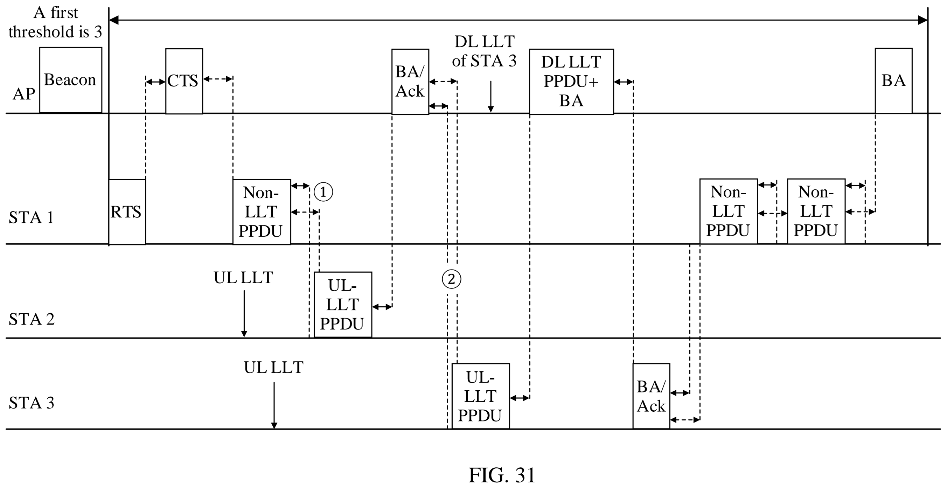

FIG. 31 is another diagram of multi-user preemption transmission according to an embodiment of this application. A multi-user preemption transmission process shown in FIG. 31 is an example of a method procedure in FIG. 29. The first communication apparatus may be an AP in FIG. 31, and the second communication apparatus may be a STA 2 or a STA 3 in FIG. 31. As shown in FIG. 31, the AP sends a beacon frame. The beacon frame indicates that a first threshold is 3, for example, TATT count=3 in the beacon frame. A STA 1 and the AP occupy a TXOP (namely, a TXOP in FIG. 31) by exchanging an RTS frame and a CTS frame, where the STA is a TXOP initiator. After receiving the CTS frame, the STA 1 sends a 1^{st} non-LLT PPDU after a specified interval. The STA 2 buffers UL LLT data at a moment indicated by a leftmost downward arrow (namely, a downward arrow on the STA 2), and the STA 3 buffers the UL LLT data at a moment indicated by a downward arrow in the middle (namely, a downward arrow on the STA 3). The STA 2 and the STA 3 contend for a channel in a time window ①. After successfully contending for the channel, the STA 2 performs preemption transmission of a UL LLT PPDU. A start moment of the time window ① is a transmission end moment of the 1^{st} non-LLT PPDU+an SIFS, and an end moment is a transmission end moment of the 1^{st} non-LLT PPDU+a specified interval. After receiving the UL LLT PPDU from the STA 2, the AP sends a BA/an Ack after the SIFS. The STA 3 contends for a channel in a time window ②. After successfully contending for the channel, the STA 3 performs preemption transmission of a UL LLT PPDU. A start moment of the time window ② is a transmission end moment of the BA/Ack sent by the AP+the SIFS, and an end moment is a transmission end moment of the BA/Ack sent by the AP+a specified interval. The AP buffers, at a moment indicated by a rightmost downward arrow (namely, a downward arrow on the AP), the DL LLT data to be sent to the STA 3. The AP receives the UL LLT PPDU from the STA 3 and sends an aggregated frame including a DL LLT PPDU and a BA to the STA 3 after the SIFS. The STA 3 receives the aggregated frame including the DL LLT PPDU and the BA and sends a BA/an Ack after the SIFS. Because there is no LLT preemption transmission within a specified interval after the STA 2 sends the BA/Ack, the STA 1 sends a 2^{nd} non-LLT PPDU. Because there is no LLT preemption transmission within a specified interval after the STA 2 sends the 2^{nd} non-LLT PPDU, after sending the 2^{nd} non-LLT PPDU, the STA 1 sends a 3^{rd} non-LLT PPDU after a specified interval. The AP receives the 3^{rd} non-LLT PPDU (a first condition is met) and sends a BA after a specified interval. In a multi-user uplink preemption transmission scenario (FIG. 31), only a plurality of users may perform preemption transmission of uplink data in a TXOP that is not occupied by the plurality of users, for example, the STA 2 and the STA 3, and the plurality of users are allowed to contend for a channel only in a specified time window to transmit uplink LLT data. As shown in FIG. 31, in the time window ①, the STA 2 and the STA 3 contend for a channel, and the STA 2 successfully contends for the channel. In this case, the STA 2 performs preemption transmission of the UL LLT PPDU, and the STA 3 successfully contends for the channel in the time window (2) to perform preemption transmission of the UL LLT PPDU.

In this embodiment of this application, the first communication apparatus contends for, in the transmit opportunity that is not occupied by the first communication apparatus, the channel for transmitting the sixth data unit, and transmits the sixth data unit in the transmit opportunity on the channel obtained through contention. This embodiment of this application is applicable to a scenario in which a plurality of users perform preemption transmission of a UL LLT PPDU. To be specific, the plurality of users are allowed to perform preemption transmission of a UL LLT, so that a latency of low-latency traffic can be reduced, and an application scope of LLT preemption transmission can be expanded.

It should be noted that a communication solution (for example, the method procedure in FIG. 23) for aggregated transmission of a unicast data frame and an acknowledgment frame provided in this application is also applicable to a multi-user preemption transmission scenario. Refer to the examples in FIG. 26, FIG. 27, FIG. 28A, and FIG. 28B. Details are not described herein again. In other words, the transmission communication solution in which the unicast data frame and the acknowledgment frame are aggregated may be combined with the multi-user preemption transmission solution (for example, the method procedure in FIG. 29) provided in this application. In addition, when the first condition is met, the communication solution (for example, the method procedure in FIG. 3) for sending an acknowledgment frame provided in this application is also applicable to a multi-user preemption transmission scenario. In other words, when the first condition is met, the communication solution for sending an acknowledgment frame provided in this application may be combined with the multi-user preemption transmission solution (for example, the method procedure in FIG. 29) provided in this application. When the first condition is met, the solution for sending an acknowledgment frame provided in this application may also be combined with the communication solution of aggregated transmission of the unicast data frame and the acknowledgment frame. A data transmission process shown in the accompanying drawings in embodiments of this application is merely a part of an example, but not an entire example.

The following describes, with reference to the accompanying drawings, structures of communication apparatuses that can implement the communication methods provided in embodiments of this application.

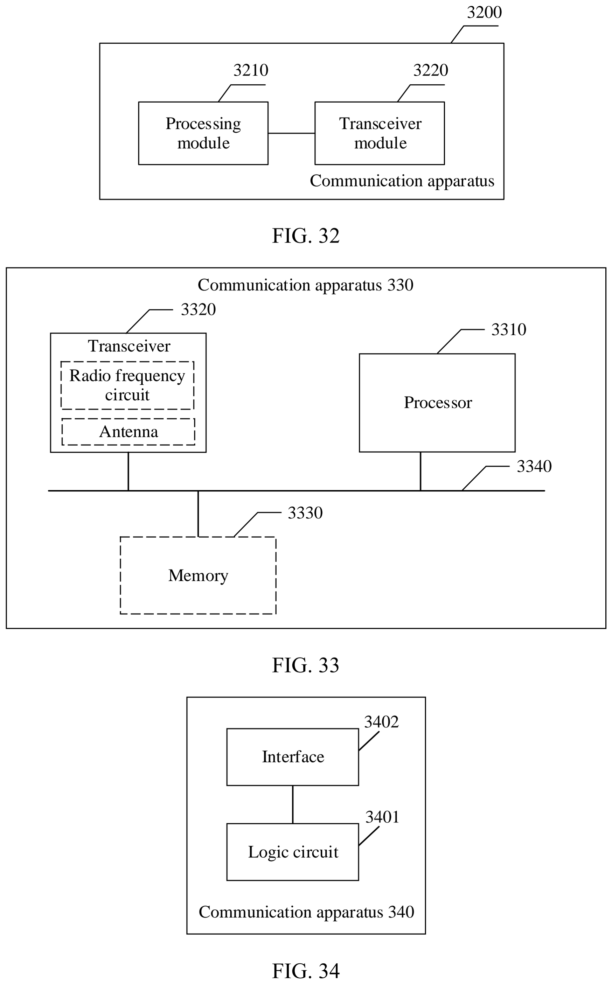

FIG. 32 is a diagram of a structure of a communication apparatus 3200 according to an embodiment of this application. The communication apparatus 3200 may correspondingly implement functions or steps implemented by the first communication apparatus in the foregoing method embodiments, or may correspondingly implement functions or steps implemented by the second communication apparatus in the foregoing method embodiments. The communication apparatus may include a processing module 3210 and a transceiver module 3220. In a possible implementation, the apparatus may further include a storage unit. The storage unit may be configured to store instructions (code or a program) and/or data. The processing module 3210 and the transceiver module 3220 may be coupled to the storage unit. For example, the processing module 3210 may read the instructions (the code or the program) and/or the data in the storage unit, to implement a corresponding method. The foregoing units may be independently disposed, or may be partially or completely integrated. For example, the transceiver module 3220 may include a sending module and a receiving module. The sending module may be a transmitter, and the receiving module may be a receiver. An entity corresponding to the transceiver module 3220 may be a transceiver, or may be a communication interface.

In some possible implementations, the communication apparatus 3200 can correspondingly implement behavior and functions of the first communication apparatus in the foregoing method embodiments. For example, the communication apparatus 3200 may be the first communication apparatus, or may be a component (for example, a chip or a circuit) used in the first communication apparatus. The transceiver module 3220 may be configured to perform, for example, all receiving or sending operations performed by the first communication apparatus in the embodiments in FIG. 3, FIG. 7, FIG. 12, FIG. 15, FIG. 16, FIG. 23, and FIG. 29. The processing module 3210 is configured to perform all operations other than the receiving and sending operations performed by the first communication apparatus in the embodiments in FIG. 3, FIG. 7, FIG. 12, FIG. 15, FIG. 16, FIG. 23, and FIG. 29.

In some possible implementations, the communication apparatus 3200 can correspondingly implement behavior and functions of the second communication apparatus in the foregoing method embodiments. For example, the communication apparatus 3200 may be the second communication apparatus, or may be a component (for example, a chip or a circuit) used in the second communication apparatus. The transceiver module 3220 may be configured to perform, for example, all receiving or sending operations performed by the second communication apparatus in the embodiments in FIG. 3, FIG. 7, FIG. 12, FIG. 15, FIG. 16, and FIG. 23. The processing module 3210 is configured to perform all operations performed by the second communication apparatus other than the receiving and sending operations.

FIG. 33 is a diagram of a structure of another communication apparatus 330 according to an embodiment of this application. The communication apparatus in FIG. 33 may be the foregoing first communication apparatus, or may be the foregoing second communication apparatus.

As shown in FIG. 33, the communication apparatus 330 includes at least one processor 3310 and a transceiver 3320.

In some embodiments of this application, the processor 3310 and the transceiver 3320 may be configured to perform functions, operations, or the like performed by the first communication apparatus. The transceiver 3320 is, for example, configured to perform all receiving or sending operations performed by the first communication apparatus in the embodiments in FIG. 3, FIG. 7, FIG. 12, FIG. 15, FIG. 16, FIG. 23, and FIG. 29. For example, the processor 3310 is configured to perform all operations other than the receiving and sending operations performed by the first communication apparatus in the embodiments in FIG. 3, FIG. 7, FIG. 12, FIG. 15, FIG. 16, FIG. 23, and FIG. 29.

In some embodiments of this application, the processor 3310 and the transceiver 3320 may be configured to perform functions, operations, or the like performed by the second communication apparatus. The transceiver 3320 is, for example, configured to perform all receiving or sending operations performed by the second communication apparatus in the embodiments in FIG. 3, FIG. 7, FIG. 12, FIG. 15, FIG. 16, and FIG. 23. For example, the processor 3310 is configured to perform all operations other than the receiving and sending operations performed by the second communication apparatus in the embodiments in FIG. 3, FIG. 7, FIG. 12, FIG. 15, FIG. 16, and FIG. 23.

The transceiver 3320 is configured to communicate with another device/apparatus via a transmission medium. The processor 3310 receives/sends data and/or signaling via the transceiver 3320, and is configured to implement the methods in the foregoing method embodiments. The processor 3310 may implement a function of the processing module 3210, and the transceiver 3320 may implement a function of the transceiver module 3220.

Optionally, the transceiver 3320 may include a radio frequency circuit and an antenna. The radio frequency circuit is mainly configured to: convert a baseband signal and a radio frequency signal, and process a radio frequency signal. The antenna is mainly configured to: receive and send a radio frequency signal in a form of electromagnetic wave. An input/output apparatus, like a touchscreen, a display, or a keyboard, is mainly configured to: receive data input by a user and output data to the user.

Optionally, the communication apparatus 330 may further include at least one memory 3330, configured to store program instructions and/or data. The memory 3330 is coupled to the processor 3310. The coupling in this embodiment of this application may be an indirect coupling or a communication connection between apparatuses, units, or modules in an electrical form, a mechanical form, or another form, and is used for information exchange between the apparatuses, the units, or the modules. The processor 3310 may cooperate with the memory 3330. The processor 3310 may execute the program instructions stored in the memory 3330. At least one of the at least one memory may be included in the processor.

The processor 3310 may read a software program in the memory 3330, interpret and execute instructions of the software program, and process data of the software program. When data needs to be sent wirelessly, the processor 3310 performs baseband processing on to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 3310. The processor 3310 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In embodiments of this application, a specific connection medium among the transceiver 3320, the processor 3310, and the memory 3330 is not limited. In this embodiment of this application, the memory 3330, the processor 3310, and the transceiver 3320 are connected through a bus 3340 in FIG. 33. The bus is represented by a bold line in FIG. 33. A manner of connection between other components is merely an example for description and is not limited thereto. The bus may be classified into an address bus, a data bus, a control bus, and the like. For ease of representation, the bus is represented by using only one bold line in FIG. 33, which, however, does not mean that there is only one bus or one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 34 is a diagram of a structure of another communication apparatus 340 according to an embodiment of this application. As shown in FIG. 34, the communication apparatus shown in FIG. 34 includes a logic circuit 3401 and an interface 3402. The processing module 3210 in FIG. 32 may be implemented by using the logic circuit 3401, and the transceiver module 3220 in FIG. 32 may be implemented by using the interface 3402. The logic circuit 3401 may be a chip, a processing circuit, an integrated circuit, a system on chip (system on chip, SoC), or the like, and the interface 3402 may be a communication interface, an input/output interface, or the like. In this embodiment of this application, the logic circuit and the interface may be coupled to each other. A specific manner of connection between the logic circuit and the interface is not limited in embodiments of this application.

In some embodiments of this application, the logic circuit and the interface may be configured to perform functions, operations, or the like performed by the first communication apparatus.

In some embodiments of this application, the logic circuit and the interface may be configured to perform functions, operations, or the like performed by the second communication apparatus.

This application further provides a computer-readable storage medium. The computer-readable storage medium stores a computer program or instructions. When the computer program or the instructions are run on a computer, the computer is enabled to perform the method in the foregoing embodiment.

This application further provides a computer program product. The computer program product includes instructions or a computer program. When the instructions or the computer program is run on a computer, the method in the foregoing embodiments is performed.

This application further provides a communication system, including the foregoing first communication apparatus and the foregoing second communication apparatus.

This application further provides a chip. The chip includes a communication interface and a processor. The communication interface is configured to: receive and send a signal of the chip. The processor is configured to execute computer program instructions, so that a communication apparatus including the chip performs the method in the foregoing embodiments.

All or some of the foregoing embodiments may be implemented by using software, hardware, firmware, or any combination thereof. When software is used to implement the embodiments, all or a part of the embodiments may be implemented in a form of computer program product. The computer program product includes one or more computer programs or instructions. When the computer programs or instructions are loaded and executed on a computer, the procedures or the functions described in embodiments of this application are all or partially performed. The computer may be a general-purpose computer, a dedicated computer, a computer network, a network device, user equipment, or another programmable apparatus. The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

## Claims

1. A communication method, comprising:
receiving a plurality of data units; and
sending an acknowledgment frame when a first condition is met, wherein the acknowledgment frame is used to acknowledge the received plurality of data units, and the first condition comprises at least one of the following:
a quantity of physical protocol layer data units PPDUs or medium access control service data units MSDUs received in a currently occupied transmit opportunity is greater than or equal to a first threshold;
a quantity of PPDUs or MSDUs received in a currently occupied transmit opportunity after an acknowledgment frame is sent last time is greater than or equal to a second threshold;
a difference between a sending end moment of a previous acknowledgment frame and a current moment that are in a currently occupied transmit opportunity is greater than or equal to a third threshold;
a difference between a moment at which a 1^{st} data unit is received and a current moment that are in a currently occupied transmit opportunity is greater than or equal to a fourth threshold;
first indication information in a first data unit indicates to send an acknowledgment frame after the first data unit is received, wherein the first data unit is comprised in the plurality of data units; and
first indication information in a first data unit indicates that a quantity of data units to be received before an acknowledgment frame is sent is equal to 0, wherein the first data unit is comprised in the plurality of data units.

2. The method according to claim 1, wherein the method further comprises:
receiving a first communication frame, wherein the first communication frame indicates the first threshold, the second threshold, the third threshold, or the fourth threshold.

3. The method according to claim 2, wherein the first communication frame is a beacon frame, a management frame, or a control frame.

4. The method according to any one of claims 1 to 3, wherein sending the acknowledgment frame when the first condition is met comprises:
if a second data unit is being received at a moment at which it is determined that the first condition is met, sending the acknowledgment frame after the second data unit is received.

5. The method according to any one of claims 1 to 3, wherein sending the acknowledgment frame when the first condition is met comprises:
if a data unit is not being received at a moment at which it is determined that the first condition is met, sending the acknowledgment frame after the data unit is received.

6. The method according to any one of claims 1 to 3, wherein sending the acknowledgment frame when the first condition is met comprises:
when the first condition is met, determining whether a data unit is received within a first time interval, wherein a start moment of the first time interval is a moment at which it is determined that the first condition is met; and
when a third data unit is received within the first time interval, sending the acknowledgment frame after the third data unit is received.

7. The method according to any one of claims 1 to 3, wherein sending the acknowledgment frame when the first condition is met comprises:
when the first condition is met, determining whether a data unit is received within a first time interval, wherein a start moment of the first time interval is a moment at which it is determined that the first condition is met; and
when no data unit is received within the first time interval, contending for a channel, and sending the acknowledgment frame on the channel obtained through contention.

8. The method according to claim 1, wherein the first indication information is comprised in a universal signal U-SIG field or an ultra high reliability signal UHR-SIG field of the first data unit.

9. The method according to any one of claims 1 to 8, wherein the method further comprises:
transmitting a fourth data unit; and
transmitting a first aggregated frame, wherein the first aggregated frame comprises a fifth data unit and an acknowledgment frame for a first data unit set, a type of the fifth data unit is different from types of the plurality of data units, and the first data unit set comprises the fourth data unit.

10. The method according to claim 9, wherein transmitting the first aggregated frame comprises:
when the fifth data unit has been buffered before the acknowledgment frame for the first data unit set is sent, after the fourth data unit is received, sending the first aggregated frame after a short interframe space SIFS.

11. The method according to any one of claims 1 to 10, wherein the plurality of data units comprise a data unit of a first type and/or a data unit of a second type, the first type is a service type whose latency requirement is lower than a fifth threshold, and the second type is a service type whose latency requirement is greater than or equal to the fifth threshold, or the first type is a service type whose priority is lower than a sixth threshold, and the second type is a service type whose priority is greater than or equal to the sixth threshold.

12. A communication method, comprising:
generating a first communication frame, wherein
the first communication frame indicates a first threshold, and the first threshold indicates a quantity of physical protocol layer data units PPDUs or medium access control service data units MSDUs that need to be received in a transmit opportunity before an acknowledgment frame; or
the first communication frame indicates a second threshold, and the second threshold indicates a quantity of PPDUs or MSDUs that need to be received in a transmit opportunity after an acknowledgment frame is sent once and before an acknowledgment frame is sent again; or
the first communication frame indicates a third threshold, and the third threshold indicates a minimum value of a difference between a sending end moment of a previous acknowledgment frame and a current moment that are in a transmit opportunity; or
the first communication frame indicates a fourth threshold, and the fourth threshold indicates a minimum value of a difference between a moment at which a 1^{st} data unit is received and a current moment that are in a transmit opportunity; or
first indication information in the first communication frame indicates whether to send an acknowledgment frame after the first communication frame is received; or
first indication information in the first communication frame indicates a quantity of data units to be received before an acknowledgment frame is sent; and
sending the first communication frame.

13. The method according to claim 12, wherein the first communication frame is a beacon frame, a management frame, or a control frame.

14. The method according to claim 12, wherein the first communication frame comprises the first indication information, and the first communication frame is a data unit.

15. The method according to claim 12 or 14, wherein the first indication information in the first communication frame indicates to send the acknowledgment frame after the first communication frame is received; and the method further comprises:
sending the first communication frame or a trigger frame when no acknowledgment frame is received within a second time interval after the first communication frame is sent, wherein a start moment of the second time interval is a moment at which the first communication frame is sent for a first time, the trigger frame is used to request to send an acknowledgment frame for one or more data units, and the one or more data units comprise the first communication frame.

16. The method according to claim 12, 14, or 15, wherein the first indication information in the first communication frame indicates to send the acknowledgment frame after the first communication frame is received; and sending the first communication frame comprises:
sending the first communication frame when a quantity of PPDUs or MSDUs to be transmitted within remaining duration of a currently occupied transmit opportunity is less than the first threshold or the second threshold;or
sending the first communication frame when remaining duration of a currently occupied transmit opportunity is less than the third threshold or the fourth threshold.

17. The method according to any one of claims 12 to 16, wherein the method further comprises:
transmitting a fourth data unit; and
transmitting a first aggregated frame, wherein the first aggregated frame comprises a fifth data unit and an acknowledgment frame for a first data unit set, a type of the fifth data unit is different from types of the plurality of data units, and the first data unit set comprises the fourth data unit.

18. A communication method, comprising:
contending for, in a transmit opportunity that is not occupied, a channel for transmitting a sixth data unit; and
transmitting the sixth data unit in the transmit opportunity on the channel obtained through contention.

19. The method according to claim 18, wherein contending for, in the transmit opportunity, the channel for transmitting the sixth data unit comprises:
after obtaining the to-be-transmitted sixth data unit in the transmit opportunity, contending for the channel for transmitting the sixth data unit; or
after a sending end moment of a seventh data unit, contending for the channel for transmitting the sixth data unit, wherein the sending end moment is after a moment at which the sixth data unit is obtained, and a type of a service transmitted by using the sixth data unit is different from a type of a service transmitted by using the seventh data unit.

20. The method according to claim 18 or 19, wherein the method further comprises:
transmitting an eighth data unit; and
transmitting a second aggregated frame, wherein the second aggregated frame comprises a ninth data unit and an acknowledgment frame for a second data unit set, and the second data unit set comprises the eighth data unit.

21. A communication method, comprising:
transmitting an eighth data unit; and
transmitting a second aggregated frame, wherein the second aggregated frame comprises a ninth data unit and an acknowledgment frame for a second data unit set, and the second data unit set comprises the eighth data unit.

22. The method according to claim 21, wherein transmitting the second aggregated frame comprises:
when the ninth data unit has been buffered before the acknowledgment frame for the second data unit set is sent, after the eighth data unit is received, sending the second aggregated frame after a short interframe space SIFS.

23. A communication apparatus, comprising a module or a unit configured to implement the method according to any one of claims 1 to 11.

24. A communication apparatus, comprising a module or a unit configured to implement the method according to any one of claims 12 to 17.

25. A communication apparatus, comprising a module or a unit configured to implement the method according to any one of claims 18 to 20.

26. A communication apparatus, comprising a module or a unit configured to implement the method according to claim 21 or 22.

27. A computer-readable storage medium, wherein the computer-readable storage medium stores a computer program, the computer program comprises program instructions, and when the program instructions are executed, a computer is enabled to perform the method according to any one of claims 1 to 22.

28. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 22 through a logic circuit or by executing code instructions.

29. A chip, comprising:
a communication interface, configured to: receive and send a signal of the chip; and
a processor, configured to execute computer program instructions, so that a communication apparatus comprising the chip performs the method according to any one of claims 1 to 22.

30. A communication system, comprising the communication apparatus according to claim 23 and the communication apparatus according to claim 24.

31. A computer program product, wherein when the computer program product runs on a computer, the computer is enabled to perform the method according to any one of claims 1 to 22.
